# EUROPÄISCHE PATENTSCHRIFT

(11) **EP 2 911 506 B1**
(45) Veröffentlichungstag und Bekanntmachung des Hinweises auf die Patenterteilung: **13.09.2017**
(21) Anmeldenummer: 13786416.1
(22) Anmeldetag: 23.10.2013
(51) Int. Cl.: A01N 25/02, A01N 25/30

(54) **DRIFTREDUZIERENDE ZUSAMMENSETZUNGEN**
DRIFT REDUCING COMPOSITIONS
COMPOSITIONS RÉDUISANT LA DÉRIVE

(30) Priorität: 24.10.2012 EP 12189831
(43) Veröffentlichungstag der Anmeldung: 02.09.2015
(73) Patentinhaber: Clariant International Ltd, 4132 Muttenz (CH)
(72) Erfinder: BAUR, Peter, 86938 Schondorf (DE); MILBRADT, Robert, 65191 Wiesbaden (DE); MANSOUR, Peter, 65185 Wiesbaden (DE)
(74) Vertreter: Paczkowski, Marcus
(86) Internationale Anmeldenummer: PCT/EP2013/003196
(87) Internationale Veröffentlichungsnummer: WO 2014/063818

(56) Entgegenhaltungen:
- WO-A1-2012/119772
- WO-A2-2010/051435
- DE-A1- 10 117 993
- Robyn Gaskin ET AL: "Report to NZ Kiwifruit Growers Inc. SFF Project Number 06/090 Minimising Off-Target Impacts of Kiwifruit Orchard Sprays Field studies to optimise spray deposits on shelterbelts and minimise off-target drift", , 31. Juli 2009 (2009-07-31), XP055094724, Gefunden im Internet: URL:http://maxa.maf.govt.nz/sff/about-proj ects/search/06-090/shelter-drift-report.pd f [gefunden am 2014-01-03]
- Tim Brown: "M A T E R I A L S A F E T Y D A T A S H E E T", , 23. Oktober 2006 (2006-10-23), Seiten 1-4, XP055094722, Gefunden im Internet: URL:http://www.kernred.com/kern-agcomm/pro ducts/LATRON B-1956.pdf [gefunden am 2014-01-03]

## Beschreibung

Die Erfindung betrifft die Verwendung bestimmter Copolymere, insbesondere als Zusammensetzungen mit einem wasserunmischbaren Flüssigmedium, als driftreduzierende Komponenten in Pestizidzubereitungen sowie ein Verfahren zur Verminderung des Drifts bei der Applikation von Pestizidzubereitungen.

Pflanzenschutzmittel werden in sehr effizienter Weise unter Einsatz von Sprühtanks in Flugzeugen, Traktoren oder anderen Vorrichtungen auf landwirtschaftliche Produktionsfelder aufgebracht. Um eine möglichst genaue Platzierung der Wirksubstanzen zu erreichen, ist es erforderlich, einen möglichst engen Sprühkegel zu erhalten und ein Abdriften des Sprühnebels aus dem Zielort heraus zu vermeiden.

Die Drift des Sprühkegels wird im Wesentlichen durch die Tröpfchengröße bestimmt. Je kleiner die Tröpfchen, umso länger die Verweilzeit in der Luft und umso größer die Tendenz zu verdampfen und/oder horizontal abzudriften und den Zielort zu verfehlen.

Eine deutliche Minimierung des Drift-Effektes kann durch Zusatz geeigneter "drift control Agentien" zu Pestizid-Formulierungen erreicht werden, die eine Vergrößerung der Tröpfchen im Sprühnebel bewirken. Die mit drift control Agentien modifizierten Formulierungen müssen darüber hinaus gegenüber den Scherkräften, denen sie in den Sprühpumpen- und -düsen ausgesetzt sind, unempfindlich sein. Gute biologische Abbaubarkeit, Kompatibilität mit anderen Bestandteilen der Pflanzenschutzmittel, sowie eine hohe Lagerstabilität und Temperaturstabilität sind weitere Anforderungen an "drift control agents". Es ist bekannt, dass die Rheologie wässriger Mittel durch Zusatz wasserlöslicher Polymere, beispielsweise Polyacrylamide, Acrylamid/ Acrylsäurepolymere, Natriumpolyacrylat, Carboxymethylcellulose, Hydroxyethylcellulose, Methylcellulose, Polysaccharide, natürlicher und synthetischer guar gum (US 4,413,087, US 4,505,827, US 5,874,096) modifiziert werden kann.

Polymere aus Acrylamido-2-methyl-propansulfonsäure und Acrylamid und deren Verwendung als driftreduzierende Adjuvantien sind aus der WO 2001/060877 bekannt.

Obwohl mit den bekannten Systemen bereits gute Ergebnisse erzielt werden, ist man aus technischen, ökonomischen und ökologischen Gründen weiterhin bestrebt, geeignete "drift control agents" zu finden, die auch unter Praxisbedingungen die Tröpfchenvolumina der wässrigen Mittel effektiv vergrößern und ein Abdriften des Sprühkegels reduzieren.

Überraschenderweise wurde gefunden, dass sich bestimmte Copolymere auf Polyglycerinbasis, insbesondere in Zusammensetzungen mit wasserunmischbaren Ölen, als driftreduzierende Adjuvantien für Pflanzenschutzmittel eignen und beim Versprühen dieser Pflanzenschutzmittel eine Vergrößerung der Teilchen und eine Reduktion des Sprühkegels bewirken. Die Zusammensetzungen der genannten Art sind bereits aus der WO 2012/119772 allgemein als Zusätze zu Pflanzenschutzmitteln bekannt. Ein Hinweis auf eine mögliche Eignung zur Driftverminderung ist dem Dokument jedoch nicht zu entnehmen.

Gegenstand der Erfindung ist daher die Verwendung von einem oder mehreren Copolymeren A), die eine oder mehrere Struktureinheiten hervorgegangen aus
a) 19,9 bis 75,9 Gew.-% Glycerin
b) 0,1 bis 30 Gew.-% mindestens einer Dicarbonsäure, wobei es sich bei der mindestens einen Dicarbonsäure b) um Oxalsäure; eine Dicarbonsäure gemäß Formel (II)

   HOOC-R²-COOH (II)

   und/oder eine Dicarbonsäure gemäß Formel (III) 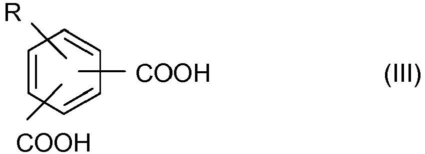 handelt, wobei R² eine (C₁-C₄₀)-Alkylen-Brücke oder eine (C₂-C₂₀)-Alkenylen-Brücke darstellt und R H, (C₁-C₂₀)-Alkyl, (C₂-C₂₀)-Alkenyl, Phenyl, Benzyl, Halogen, -NO₂, (C₁-C₆)-Alkoxy, -CHO oder -CO((C₁-C₆)-Alkyl) darstellt, und
c) 24 bis 80 Gew.-% mindestens einer Monocarbonsäure gemäß Formel (I)

   R¹-COOH (I)

   wobei R¹ (C₅-C₂₉)-Alkyl, (C₇-C₂₉)-Alkenyl; Phenyl oder Naphthyl darstellt, enthalten,
   zur Verminderung des Drifts bei der Applikation von Pestizidzubereitungen.

In WO 2011/029561 A2 werden Zusammensetzungen beschrieben enthaltend a) ein oder mehrere Pestizide, b) ein oder mehrere Copolymere, erhältlich durch Copolymerisation von i) Glycerin, ii) mindestens einer Dicarbonsäure und iii) mindestens einer Monocarbonsäure, c) ein oder mehrere amphotere oberflächenaktive Substanzen und d) Wasser. Es wird offenbart, dass die Zusammensetzungen insbesondere zur Kontrolle und/oder Bekämpfung von Unkraut, Pilzerkrankungen oder Insektenbefall geeignet sind.

US 5,824,797 beschreibt u.a., dass durch Verwendung von Guar, Derivaten von Guar oder Kombinationen davon in wässrigen Zusammensetzungen die Drift beim Versprühen der Zusammensetzungen reduziert werden kann.

Gegenstand der Erfindung ist weiterhin die Verwendung von Zusammensetzungen, enthaltend
A) ein oder mehrere Copolymere, wobei die Copolymere eine oder mehrere Struktureinheiten hervorgegangen aus
   a) 19,9 bis 75,9 Gew.-% Glycerin
   b) 0,1 bis 30 Gew.-% mindestens einer Dicarbonsäure, wobei es sich bei der mindestens einen Dicarbonsäure b) um Oxalsäure; eine Dicarbonsäure gemäß Formel (II)

      HOOC-R²-COOH (II)

      und/oder eine Dicarbonsäure gemäß Formel (III) 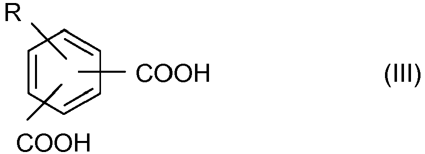 handelt, wobei R² eine (C₁-C₄₀)-Alkylen-Brücke oder eine (C₂-C₂₀)-Alkenylen-Brücke darstellt und R H, (C₁-C₂₀)-Alkyl, (C₂-C₂₀)-Alkenyl, Phenyl, Benzyl, Halogen, -NO₂, (C₁-C₆)-Alkoxy, -CHO oder -CO((C₁-C₆)-Alkyl) darstellt, und
   c) 24 bis 80 Gew.-% mindestens einer Monocarbonsäure gemäß Formel (I)

      R¹-COOH (I)

      wobei R¹ (C₅-C₂₉)-Alkyl; (C₇-C₂₉)-Alkenyl; Phenyl oder Naphthyl darstellt, enthalten
      und
B) ein wasserunmischbares Flüssigmedium, enthaltend einen oder mehrere Vertreter aus der Gruppe bestehend aus Estern von Mono- und Dicarbonsäuren, deren Säure- und/oder Alkoholkomponente mindestens 4 C-Atome aufweist, pflanzlichen Ölen, Mineralölen und aromatischen Kohlenwasserstoffen, zur Verminderung des Drifts bei der Applikation von Pestizidzubereitungen.

Unter "Drift" im Sinne der Erfindung versteht man den Effekt, dass sich beim Versprühen des Pflanzenschutzmittels kleine Tröpfchen bilden, die über die zu behandelnde Fläche hinaus getragen werden können und das Versprühen so weniger effektiv oder sogar schädlich für angrenzende Flächen und Kulturen machen können.

Unter Driftreduzierung versteht man erfindungsgemäß vorzugsweise die Verminderung des Anteils von kleinen Tröpfchen im Vergleich zur Applikation eines Mittels, welches die erfindungsgemäß eingesetzte Zusammensetzung nicht enthält, vorzugsweise um mindestens 10 % (bezogen auf die Tröpfchen mit kleineren als dem mittleren Durchmesser bei dem Mittel ohne erfindungsgemäß eingesetzte Zusammensetzung).

Unter Applikation im Sinne der Erfindung versteht man das Aufbringen einer wässrigen Spritzbrühe, welche ein oder mehrere Wirkstoffe, die erfindungsgemäß eingesetzten Copolymere oder Zusammensetzungen, sowie gegebenenfalls weitere Hilfs- und/oder Zusatzstoffe enthält.

Bevorzugt enthalten die erfindungsgemäß eingesetzten Zusammensetzungen entweder kein Wasser oder Wasser in einer Menge kleiner oder gleich 1,0 Gew.-% jeweils bezogen auf das Gesamtgewicht der jeweiligen Zusammensetzung.

In der Copolymer-Komponente A) beziehen sich die genannten Anteile der Monomere a), b) und c) (in Gew.-%) auf die Gesamtmenge der Monomere wie sie zur Herstellung der Copolymere eingesetzt wurden. Sie beziehen sich nicht auf die Endzusammensetzung der Copolymere, die durch Abspaltung von bei der Kondensation freiwerdendem Wasser geringfügig davon abweicht. Wie in der WO 2012/119772 offenbart ist, hat der Anteil der Dicarbonsäure auf die Dispergierbarkeit der Copolymere gemäß Komponente A) der erfindungsgemäß eingesetzten Zusammensetzungen in dem Dispergiermedium keinen Einfluss, sondern wird lediglich durch den Anteil der Monocarbonsäure bestimmt.

Die grundsätzlich möglichen Zusammensetzungen der Copolymere, sowie Herstellung und Ausführungsformen der Copolymerisation sind in EP 1 379 129 beschrieben. Allen gemein ist, dass die Kondensationsreaktionen zwischen Alkoholen und/oder Carbonsäuren ablaufen, d. h. die Monomere durch Etherbindungen (im Falle der Kondensation von zwei Alkohol-Funktionen des Glycerins) bzw. durch Esterbindungen (im Falle der Kondensation einer Alkohol-Funktion des Glycerins mit einer Carbonsäure-Funktion der Mono- oder Dicarbonsäure) miteinander verbunden sind.

Die Copolymere A) werden vorzugsweise derart hergestellt, dass Monoglycerin zunächst zu einem Oligo- oder Polyglycerin kondensiert wird und erst danach mit der mindestens einen Dicarbonsäure b) und der mindestens einen Monocarbonsäure c) umgesetzt wird. Dies bewirkt, dass die Copolymere A) in dieser bevorzugten Ausführungsform der Erfindung kondensierte Oligo- oder Polyglycerin-Einheiten enthalten.

Besonders bevorzugt handelt es sich bei der mindestens einen Dicarbonsäure b) um Phthalsäure und bei der mindestens einen Monocarbonsäure c) um eine Cocosfettsäure.

In einer ganz besonders bevorzugten Ausführungsform basieren die Copolymere A) auf
34,0 bis 62,0 Gew.-% Glycerin,
0,2 bis 21,0 Gew.-% Phthalsäure und
24,0 bis 54,0 Gew.-% Cocosfettsäure.

Der mittlere Kondensationsgrad des Glycerins liegt dabei bevorzugt zwischen 4,5 und 10.

Insbesondere bevorzugt sind die im Beispielteil aufgeführten Copolymere 1 bis 7.

Vorzugsweise besteht das eine oder bestehen die mehreren Copolymere A) aus den Komponenten a), b) und c).

Der Großteil der Rohstoffe, die für die Herstellung der Copolymere benötigt werden, stammt aus nachwachsenden Rohstoffquellen. Glycerin ist heutzutage ein Nebenprodukt der Biodieselherstellung, die Monocarbonsäuren werden aus tierischen oder pflanzlichen Fetten oder Ölen gewonnen, lediglich die Dicarbonsäure ist üblicherweise synthetischen Ursprungs.

Wie bereits erwähnt werden unter den bevorzugt eingesetzten "wasserfreien" oder "nicht-wässrigen" Zusammensetzungen im Rahmen der Erfindung bevorzugt Zusammensetzungen verstanden, die entweder kein Wasser oder Wasser in einer Menge kleiner oder gleich 1,0 Gew.-% enthalten, bezogen auf das Gesamtgewicht der jeweiligen Zusammensetzung. Besonders bevorzugt enthalten die erfindungsgemäß eingesetzten Zusammensetzungen weniger als 0,5 Gew.-% Wasser, bezogen auf das Gesamtgewicht der jeweiligen Zusammensetzung. Diese Wassergehalte resultieren üblicherweise aus Restmengen Wasser, das als Nebenprodukt bei der Kondensation der Copolymere entsteht, sind bereits in den verwendeten Lösemitteln enthalten oder werden im Zuge der Herstellung der Zusammensetzungen als Verunreinigung während des Prozesses mit eingebracht.

Die nicht mit Wasser mischbaren Komponenten des Flüssigmediums B) sind organische Flüssigkeiten, die bei Raumtemperatur (25 °C) eine Löslichkeit von maximal 5 Gew.-% und bevorzugt von maximal 1 Gew.-% in Wasser aufweisen. Die Komponenten sind ausgewählt aus der Gruppe bestehend aus Estern von Mono- und/oder Dicarbonsäuren, deren Säure- und/oder Alkoholkomponente mindestens 4 C-Atome aufweist, pflanzlichen Ölen, Mineralölen und aromatischen Kohlenwasserstoffen.

Bevorzugt enthält das wassermischbare Flüssigmedium B) C₆-C₁₆-Aromatengemische oder Methylester von Fettsäuren pflanzlichen oder tierischen Ursprungs.

Weiterhin bevorzugt sind Ester von Mono- und/oder Dicarbonsäuren mit jeweils mindestens 4 C-Atomen in der Säurekomponente und/oder Alkoholkomponente sowie aromatische Kohlenwasserstoffe.

Bevorzugte Ester von Monocarbonsäuren und/oder Dicarbonsäuren mit jeweils mindestens 4 C-Atomen in der Säurekomponente und/oder Alkoholkomponente sind Fettsäurealkylester, insbesondere mit 6 bis 18 C-Atomen in der Säurekomponente und 1 bis 8 C-Atomen in der Alkoholkomponente. Besonders bevorzugt ist Rapsölmethylester, d.h. ein Umesterungsprodukt von Rapsöl und Methanol, das aus einem Gemisch von Methylestern gesättigter und ungesättigter Fettsäuren mit jeweils 16 bis 22, insbesondere 16 bis 18 C-Atomen besteht.

Weiterhin bevorzugte Ester sind Milchsäureester mit 4 oder mehr C-Atomen im Alkoholteil, wobei 2-Ethylhexyllactat besonders bevorzugt ist.

Bevorzugt als aromatische Kohlenwasserstoffe sind zum Beispiel Solvent Naphtha, Toluol, Xylol und insbesondere (C₆-C₁₆)-Aromatengemische, beispielsweise die Solvesso Reihe mit den Typen Solvesso 100 (Kp. 162 bis 177 °C), Solvesso 150 (Kp. 187 bis 207 °C) und Solvesso 200 (Kp. 219 bis 282 °C).

Bevorzugt sind beispielsweise Kombinationen der Komponenten A) und B), bei denen A) ein Copolymer aus Glycerin, Phthalsäure und Cocosfettsäure, insbesondere wie oben beschrieben, darstellt und B) Rapsölmethylester ist.

Der Anteil des einen oder der mehreren Copolymere der Komponente A) in den erfindungsgemäß eingesetzten Zusammensetzungen beträgt vorzugsweise 1 bis 90 Gew.-%, besonders bevorzugt 10 bis 80 Gew.-% und insbesondere bevorzugt 20 bis 70 Gew.-% und der Anteil des einen oder der mehreren nicht mit Wasser mischbaren Lösemittel der Komponente B) beträgt vorzugsweise 10 bis 99 Gew.-%, besonders bevorzugt 20 bis 90 Gew.-% und insbesondere bevorzugt 30 bis 80 Gew.-%. Diese Mengenangaben sind auf das Gesamtgewicht der erfindungsgemäß eingesetzten Zusammensetzungen bezogen.

Neben Copolymer(en) und Flüssigmedium können die erfindungsgemäß eingesetzten Zusammensetzungen oder Zubereitungen, welche ein oder mehrere Copolymere A) ohne das Flüssigmedium enthalten, weitere Zusatzstoffe beinhalten, die verschiedene Funktionen übernehmen können. Beispiele für Hilfsstoffe nach ihrer Funktion sind zusätzliche Lösemittel, Emulgatoren, Adjuvants, Netzmittel, Penetrationsförderer, Kältestabilisatoren, Farbmittel, Entschäumer, Antioxidantien, Frostschutzmittel.

Die erfindungsgemäß eingesetzten Zusammensetzungen oder die Copolymere A) werden bevorzugt als Tank-mix Additiv bzw. Tank-mix Adjuvant verwendet. "Tank-mix" bedeutet, dass die Copolymere oder die erfindungsgemäß eingesetzte Zusammensetzung der wässrigen Spritzbrühe einer Pestizidzubereitung zugesetzt wird. Bei einem Tank-mix Adjuvant handelt es sich um ein entsprechendes Hilfsmittel, das kein Pestizid enthält, aber mit einem oder mehreren Pestiziden und gegebenenfalls weiteren Zusatzstoffen, wie beispielsweise Dünger, vor der Applikation des Pestizids zu einer Spritzbrühe verarbeitet wird und zu einer Erhöhung der biologischen Aktivität des Pestizids führt. Eine Übersicht über die gebräuchlichsten Typen der Tank-mix Adjuvants findet sich im "Compendium of Herbicide Adjuvants" von Bryan G. Young, 10th Edition, 2010.

Aufgrund der oberflächenaktiven Eigenschaften der Copolymere sind diese in der Lage, sofern in ausreichendem Anteil enthalten, das Lösemittel in einer wässrigen Spritzbrühe zu emulgieren und damit eine homogene Mischung zu erzielen.

Solche Zusammensetzungen werden im Folgenden auch erfindungsgemäß eingesetzte Adjuvant-Zusammensetzungen genannt.

In einer weiteren Ausführungsform enthalten die erfindungsgemäß eingesetzten Copolymere A) oder Zusammensetzungen bei Verwendung als Tank-mix Adjuvant zusätzlich eine oder mehrere oberflächenaktive Substanzen.

In einer bevorzugten Ausführungsform der Erfindung enthalten die erfindungsgemäß eingesetzten Copolymere A) oder Zusammensetzungen daher zusätzlich ein oder mehrere oberflächenaktive Substanzen.

Die oberflächenaktiven Substanzen helfen dabei, die erfindungsgemäß eingesetzten Adjuvant-Zusammensetzungen beim Verdünnen mit Wasser in eine Emulsion zu überführen, in der das Copolymer und gegebenenfalls das Lösemittel (Flüssigmedium) homogen verteilt sind.

Besonders geeignete oberflächenaktive Substanzen sind Ethoxylate oder Alkoxylate von langkettigen (C₈ bis C₂₄) linearen oder verzweigten Alkoholen, EO/PO-Blockcopolymere (EO: Ethylenoxy-Einheit; PO: Propylenoxy-Einheit), Alkylphenol- oder Tristyrylphenolethoxylate und -alkoxylate, Tri-secbutylphenolethoxylate, Rizinusölethoxylate, Ester von langkettigen Carbonsäuren mit ein- oder mehrwertigen Alkoholen sowie deren Ethoxylierungsprodukte, Salze der Dodecylbenzolsulfonsäure, Sulfosuccinate, Phosphorsäureester von ethoxylierten Fettalkoholen, Tristyrylphenolen und Tri-sec-butylphenolen und deren Salze.

Eine solche erfindungsgemäß eingesetzte Adjuvant-Zusammensetzung kann auch als "Crop Oil Concentrate" bezeichnet werden. Ein Crop Oil Concentrate (COC) ist eine besondere Form eines Tank-mix Adjuvants, üblicherweise bestehend aus einem Mineral- oder Pflanzenöl bzw. einem Fettsäuremethyl- oder Ethylester sowie einem oder mehreren Emulgatoren oder Netzmitteln. Andere gebräuchliche Namen für Crop Oil Concentrate sind Crop Oil, High Surfactant Oil Concentrate oder Vegetable Oil Concentrate bzw. Methylated oder Ethylated Vegetable Oil.

In den erfindungsgemäß eingesetzten Adjuvant-Zusammensetzungen (oder Zubereitungen ohne das Flüssigmedium B)) beträgt der Anteil des einen oder der mehreren Copolymere der Komponente A) vorzugsweise 1 bis 90 Gew.-%, besonders bevorzugt 2 bis 60 Gew.-% und insbesondere bevorzugt 5 bis 50 Gew.-%. Diese Mengenangaben sind auf das Gesamtgewicht der erfindungsgemäß eingesetzten Adjuvant-Zusammensetzungen bezogen.

In den erfindungsgemäß eingesetzten Adjuvant-Zusammensetzungen (oder Zubereitungen ohne das Flüssigmedium B)), die eine oder mehrere oberflächenaktive Substanzen enthalten, beträgt der Anteil der einen oder mehreren oberflächenaktiven Substanzen vorzugsweise 0,1 bis 50 Gew.-%, besonders bevorzugt 1 bis 30 Gew.-% und insbesondere bevorzugt 2 bis 20 Gew.-%. Diese Mengenangaben sind auf das Gesamtgewicht der erfindungsgemäß eingesetzten Adjuvant-Zusammensetzungen bezogen.

In den genannten erfindungsgemäß eingesetzten Adjuvant-Zusammensetzungen, welche ein Flüssigmedium B) enthalten, beträgt der Anteil des Flüssigmediums B) vorzugsweise 1 bis 98,9 Gew.-%, besonders bevorzugt 20 bis 80 Gew.-% und insbesondere bevorzugt 48 bis 90 Gew.-%. Diese Mengenangaben sind auf das Gesamtgewicht der erfindungsgemäß eingesetzten Adjuvant-Zusammensetzungen bezogen.

Die erfindungsgemäß eingesetzten Copolymere A) oder Zusammensetzungen können ebenfalls bei der Herstellung von wasserfreien Pestizidzubereitungen verwendet werden. Hierbei resultieren erfindungsgemäß eingesetzte Zusammensetzungen, die ein oder mehrere Pestizide enthalten.

In einer bevorzugten Ausführungsform der Erfindung enthalten die erfindungsgemäß eingesetzten Zusammensetzungen oder Zubereitungen, welche ein oder mehrere Copolymere A aber kein Flüssigmedium B) enthalten, daher zusätzlich ein oder mehrere Pestizide. Derartige Zusammensetzungen werden im Folgenden auch als "erfindungsgemäß eingesetzte Pestizid-Zusammensetzungen" bezeichnet.

Bevorzugte erfindungsgemäß eingesetzte Pestizid-Zusammensetzungen sind Emulsionskonzentrate (ECs) und Öldispersionen (ODs).

In einem Emulsionskonzentrat liegen das eine oder die mehreren Pestizide in gelöster Form in einem Lösemittel vor. In einer Öldispersion liegt das eine oder die mehreren Pestizide in dispergierter Form in einem Lösemittel (dem Öl) vor. Bei dem "Öl" kann es sich auch um kein Öl im klassischen Sinne (wie ein Mineralöl oder Pflanzenöl handeln). Vielmehr wird darunter jedes nicht mit Wasser mischbare Lösemittel verstanden.

Unter "Pestiziden" werden im Rahmen der vorliegenden Erfindung Herbizide, Fungizide, Insektizide, Akarizide, Bakterizide, Molluskide, Nematizide und Rodentizide sowie Phytohormone, wie Pflanzenwachstumsregulatoren, verstanden. Phytohormone steuern physiologische Reaktionen, wie Wachstum, Blührhythmus, Zellteilung und Samenreifung. Eine Übersicht der relevantesten Pestizide findet sich beispielsweise in "The Pesticide Manual" des British Crop Protection Council, 16th Edition 2012, Editor: C. MacBean. Auf die dort aufgeführten Wirkstoffe wird hiermit ausdrücklich Bezug genommen. Sie gelten durch Zitat als Bestandteil dieser Beschreibung.

Die Pestizide der erfindungsgemäß eingesetzten Zusammensetzungen werden vorzugsweise ausgewählt aus der Gruppe bestehend aus Herbiziden, Insektiziden, Fungiziden und Pflanzenwachstumsregulatoren. Besonders bevorzugt sind Herbizide.

Bevorzugte Fungizide sind aliphatische Stickstofffungizide, Amidfungizide wie Acylaminosäurefungizide oder Anilidfungizide oder Benzamidfungizide oder Strobilurinfungizide, aromatische Fungizide, Benzimidazolfungizide, Benzothiazolfungizide, Carbamatfungizide, Conazolfungizide wie Imidazole oder Triazole, Dicarboximidfungizide, Dithiocarbamatfungizide, Imidazolfungizide, Morpholinfungizide, Oxazolfungizide, Pyrazolfungizide, Pyridinfungizide, Pyrimidinfungizide, Pyrrolfungizide, Chinonfungizide.

Bevorzugte Insektizide sind Carbamatinsektizide, wie Benzofuranylmethylcarbamat- Insektizide oder Dimethylcarbamat-Insektizide oder Oximcarbamat-Insektizide oder Phenylmethylcarbamatinsektizide, Diamidinsektizide, Insektenwachstumsregulatoren, Macrozyklische Lactoninsektizide wie Avermectin-Insektizide oder Milbemycin-Insektizide oder Spinosyninsektizide, Nereistoxin analoge Insektizide, Nicotinoidinsektizide wie Nitroguanidinnicotinoid-Insektizide oder Pyridylmethylaminnicotinoid-Insektizide, Organophosphorinsektizide wie Organophosphatinsektizide oder Organothiophosphatinsektizide oder Phosphonatinsektizide oder Phosphoramidothioatinsektizide, Oxadiazininsektizide, Pyrazolinsektizide, Pyrethroidinsektizide wie Pyrethroidester-Insektizide oder Pyrethroidether-Insektizide oder Pyrethroidoxim-Insektizide, Tetramsäureinsektizide, Tetrahydrofurandioninsektizide, Thiazolinsektizide.
Bevorzugte Herbizide sind Amidherbizide, Anilidherbizide, aromatische Säureherbizide wie Benzoesäureherbizide oder Picolinisäureherbizide, Benzoylcyclohexanedionherbizide, Benzofuranylalkylsulfonatherbizide, Benzothiazolherbizide, Carbamatherbizide, Carbanilatherbizide, Cyclohexenoximherbizide, Cyclopropylisoxazolherbizide, Dicarboximidherbizide, Dinitroanilinherbizide, Dinitrophenolherbizide, Diphenyletherherbizide, Dithiocarbamatherbizide, Glycinderivatherbizide, Imidazolinonherbizide, Isoxazolherbizide, Isoxazolidinonherbizide, Nitrilherbizide, Organophosphorherbizide, Oxadiazolonherbizide, Oxazolherbizide, Phenoxyherbizide wie Phenoxyessigsäureherbizide oder Phenoxybutansäureherbizide oder Phenoxypropionsäureherbizide oder Aryloxyphenoxypropiosäureherbizide, Phenylpyrazolinherbizide, Pyrazolherbizide wie Benzoylpyrazolherbizide oder Phenylpyrazolherbizide, Pyridazinonherbizide, Pyridinherbizide, Pyrimidindionherbizide, Thiocarbamatherbizide, Triazinherbizide, Triazinonherbizide, Triazolherbizide, Triazolonherbizide, Triazolopyrimidinherbizide, Triketonherbizide, Uracilherbizide, Ureaherbizide wie Phenylharnstoffherbizide oder Sulfonylharnstoffherbizide.
Als Beispiele für Fungizide seien genannt:
(1) Inhibitoren der Ergosterol-Biosynthese, wie beispielsweise Aldimorph, Azaconazol, Bitertanol, Bromuconazol, Cyproconazol, Diclobutrazol, Difenoconazol, Diniconazol, Diniconazol-M, Dodemorph, Dodemorph Acetat, Epoxiconazol, Etaconazol, Fenarimol, Fenbuconazol, Fenhexamid, Fenpropidin, Fenpropimorph, Fluquinconazol, Flurprimidol, Flusilazol, Flutriafol, Furconazol, Furconazol-Cis, Hexaconazol, Imazalil, Imazalil Sulfat, Imibenconazol, Ipconazol, Metconazol, Myclobutanil, Naftifin, Nuarimol, Oxpoconazol, Paclobutrazol, Pefurazoat, Penconazol, Piperalin, Prochloraz, Propiconazol, Prothioconazol, Pyributicarb, Pyrifenox, Quinconazol, Simeconazol, Spiroxamin, Tebuconazol, Terbinafin, Tetraconazol, Triadimefon, Triadimenol, Tridemorph, Triflumizol, Triforin, Triticonazol, Uniconazol, Uniconazol-p, Viniconazol, Voriconazol, 1-(4-Chlorphenyl)-2-(1H-1,2,4-triazol-1-yl)cycloheptanol, Methyl-1-(2,2-dimethyl-2,3-dihydro-1H-inden-1-yl)-1H-imidazol-5-carboxylat, N'-{5-(Difluormethyl)-2-methyl-4-[3-(trimethylsilyl)propoxy]phenyl}-N-ethyl-N-methylimidoformamid, N-Ethyl-N-methyl-N'-{2-methyl-5-(trifluormethyl)-4-[3-(trimethylsilyl)propoxy]phenyl}imidoformamid und O-[1-(4-Methoxyphenoxy)-3,3-dimethylbutan-2-yl]-1H-imidazol-1-carbothioat.
(2) Inhibitoren der Respiration (Atmungsketten-Inhibitoren), wie beispielsweise Bixafen, Boscalid, Carboxin, Diflumetorim, Fenfuram, Fluopyram, Flutolanil, Fluxapyroxad, Furametpyr, Furmecyclox, Isopyrazam Mischung des syn-epimeren Razemates 1RS,4SR,9RS und des anti-empimeren Razemates 1RS,4SR,9SR, Isopyrazam (anti-epimeres Razemat), Isopyrazam (anti-epimeres Enantiomer 1R,4S,9S), Isopyrazam (anti-epimeres Enantiomer 1S,4R,9R), Isopyrazam (syn-epimeres Razemat 1 RS,4SR,9RS), Isopyrazam (syn-epimeres Enantiomer 1R,4S,9R), Isopyrazam (syn-epimeres Enantiomer 1S,4R,9S), Mepronil, Oxycarboxin, Penflufen, Penthiopyrad, Sedaxane, Thifluzamid, 1-Methyl-N-[2-(1,1,2,2-tetrafluorethoxy)phenyl]-3-(trifluormethyl)-1H-pyrazol-4-carboxamid, 3-(Difluormethyl)-1-methyl-N-[2-(1,1,2,2-tetrafluorethoxy)phenyl]-1H-pyrazol-4-carboxamid, 3-(Difluormethyl)-N-[4-fluor-2-(1,1,2,3,3,3-hexafluorpropoxy)phenyl]-1-methyl-1H-pyrazol-4-carboxamid, N-[1-(2,4-Dichlorphenyl)-1-methoxypropan-2-yl]-3-(difluormethyl)-1-methyl-1H-pyrazol-4-carboxamid, 5,8-Difluor-N-[2-(2-fluor-4-{[4-(trifluormethyl)pyridin-2-yl]oxy}phenyl)ethyl]quinazolin-4-amin, N-[9-(Dichlormethylen)-1,2,3,4-tetrahydro-1,4-methanonaphthalen-5-yl]-3-(difluormethyl)-1-methyl-1H-pyrazol-4-carboxamid, N-[(1S,4R)-9-(Dichlormethylen)-1,2,3,4-tetrahydro-1,4-methanonaphthalen-5-yl]-3-(difluormethyl)-1-methyl-1H-pyrazol-4-carboxamid und N-[(1R,4S)-9-(Dichlormethylen)-1,2,3,4-tetrahydro-1,4-methanonaphthalen-5-yl]-3-(difluormethyl)-1-methyl-1H-pyrazol-4-carboxamid.
(3) Inhibitoren der Respiration (Atmungsketten-Inhibitoren) am Komplex III der Atumungskette, wie beispielsweise Ametoctradin, Amisulbrom, Azoxystrobin, Cyazofamid, Coumethoxystrobin, Coumoxystrobin, Dimoxystrobin, Enestroburin, Famoxadon, Fenamidon, Fenoxystrobin, Fluoxastrobin, Kresoxim-Methyl, Metominostrobin, Orysastrobin, Picoxystrobin, Pyraclostrobin, Pyrametostrobin, Pyraoxystrobin, Pyribencarb, Triclopyricarb, Trifloxystrobin, (2E)-2-(2-{[6-(3-Chlor-2-methylphenoxy)-5-fluorpyrimidin-4-yl]oxy}phenyl)-2-(methoxyimino)-N-methylethanamid, (2E)-2-(Methoxyimino)-N-methyl-2-(2-{[({(1E)-1-[3-(trifluormethyl)phenyl]ethyliden}amino)oxy]methyl}phenyl)ethanamid, (2E)-2-(Methoxyimino)-N-methyl-2-{2-[(E)-({1-[3-(trifluormethyl)phenyl]ethoxy}imino)methyl]phenyl}ethanamid, (2E)-2-{2-[({[(1E)-1-(3-{[(E)-1-Fluor-2-phenylethenyl]oxy}phenyl)ethyliden]amino}oxy)methyl]phenyl}-2-(methoxyimino)-N-methylethanamid, (2E)-2-{2-[({[(2E,3E)-4-(2,6-Dichlorphenyl)but-3-en-2-yliden]amino}oxy)methyl]phenyl}-2-(methoxyimino)-N-methylethanamid, 2-Chlor-N-(1,1,3-trimethyl-2,3-dihydro-1H-inden-4-yl)pyridin-3-carboxamid, 5-Methoxy-2-methyl-4-(2-{[({(1E)-1-[3-(trifluormethyl)phenyl]ethyliden}amino)oxy]methyl}phenyl)-2,4-dihydro-3H-1,2,4-triazol-3-on, Methyl-(2E)-2-{2-[({cyclopropyl[(4-methoxyphenyl)imino]methyl}sulfanyl)methyl]phenyl}-3-methoxyprop-2-enoat, N-(3-Ethyl-3,5,5-trimethylcyclohexyl)-3-(formylamino)-2-hydroxybenzamid, 2-{2-[(2,5-Dimethylphenoxy)methyl]phenyl}-2-methoxy-N-methylacetamid und (2R)-2-{2-[(2,5-Dimethylphenoxy)methyl]phenyl}-2-methoxy-N-methylacetamid.
(4) Inhibitoren der Mitose und Zellteilung, wie beispielsweise Benomyl, Carbendazim, Chlorfenazol, Diethofencarb, Ethaboxam, Fluopicolid, Fuberidazol, Pencycuron, Thiabendazol, Thiophanat-Methyl, Thiophanat, Zoxamid, 5-Chlor-7-(4-methylpiperidin-1-yl)-6-(2,4,6-trifluorphenyl)[1,2,4]triazolo[1,5-a]pyrimidin und 3-Chlor-5-(6-chlorpyridin-3-yl)-6-methyl-4-(2,4,6-trifluorphenyl)pyridazin.
(5) Verbindungen mit Multisite-Aktivität, wie beispielsweise Bordeauxmischung, Captafol, Captan, Chlorothalonil, Kupferzubereitungen wie Kupferhydroxid, Kupfernaphthenat, Kupferoxid, Kupferoxychlorid, Kupfersulfat, Dichlofluanid, Dithianon, Dodine, Dodine freie Base, Ferbam, Fluorofolpet, Folpet, Guazatin, Guazatinacetat, Iminoctadin, Iminoctadinalbesilat, Iminoctadintriacetat, Mankupfer, Mancozeb, Maneb, Metiram, Zinkmetiram, Kupfer-Oxin, Propamidin, Propineb, Schwefel und Schwefelzubereitungen wie beispielsweise Calciumpolysulfid, Thiram, Tolylfluanid, Zineb und Ziram.
(6) Resistenzinduktoren, wie beispielsweise Acibenzolar-S-Methyl, Isotianil, Probenazol und Tiadinil.
(7) Inhibitoren der Aminosäure- und Protein-Biosynthese, wie beispielsweise Andoprim, Blasticidin-S, Cyprodinil, Kasugamycin, Kasugamycin Hydrochlorid Hydrat, Mepanipyrim, Pyrimethanil und 3-(5-Fluor-3,3,4,4-tetramethyl-3,4-dihydroisoquinolin-1-yl)quinolin.
(8) Inhibitoren der ATP Produktion, wie beispielsweise Fentin Acetat, Fentin Chlorid, Fentin Hydroxid und Silthiofam.
(9) Inhibitoren der Zellwandsynthese, wie beispielsweise Benthiavalicarb, Dimethomorph, Flumorph, Iprovalicarb, Mandipropamid, Polyoxins, Polyoxorim, Validamycin A und Valifenalat.
(10) Inhibitoren der Lipid- und Membran-Synthese, wie beispielsweise Biphenyl, Chloroneb, Dicloran, Edifenphos, Etridiazol, lodocarb, Iprobenfos, Isoprothiolan, Propamocarb, Propamocarb Hydrochlorid, Prothiocarb, Pyrazophos, Quintozen, Tecnazene und Tolclofos-Methyl.
(11) Inhibitoren der Melanin-Biosynthese, wie beispielsweise Carpropamid, Diclocymet, Fenoxanil, Fthalid, Pyroquilon, Tricyclazol und 2,2,2-Trifluorethyl {3-methyl-1-[(4-methylbenzoyl)amino]butan-2-yl}carbamat.
(12) Inhibitoren der Nukleinsäuresynthese, wie beispielsweise Benalaxyl, Benalaxyl-M (Kiralaxyl), Bupirimat, Clozylacon, Dimethirimol, Ethirimol, Furalaxyl, Hymexazol, Metalaxyl, Metalaxyl-M (Mefenoxam), Ofurace, Oxadixyl und Oxolinsäure.
(13) Inhibitoren der Signaltransduktion, wie beispielsweise Chlozolinat, Fenpiclonil, Fludioxonil, Iprodion, Procymidon, Quinoxyfen und Vinclozolin.
(14) Entkoppler, wie beispielsweise Binapacryl, Dinocap, Ferimzon, Fluazinam und Meptyldinocap.
(15) Weitere Verbindungen, wie beispielsweise Benthiazol, Bethoxazin, Capsimycin, Carvon, Chinomethionat, Pyriofenon (Chlazafenon), Cufraneb, Cyflufenamid, Cymoxanil, Cyprosulfamide, Dazomet, Debacarb, Dichlorophen, Diclomezin, Difenzoquat, Difenzoquat Methylsulphat, Diphenylamin, Ecomat, Fenpyrazamin, Flumetover, Fluoromid, Flusulfamid, Flutianil, Fosetyl-Aluminium, Fosetyl-Calcium, Fosetyl-Natrium, Hexachlorbenzol, Irumamycin, Methasulfocarb, Methylisothiocyanat, Metrafenon, Mildiomycin, Natamycin, Nickel Dimethyldithiocarbamat, Nitrothal-Isopropyl, Octhilinone, Oxamocarb, Oxyfenthiin, Pentachlorphenol und dessen Salze, Phenothrin, Phosphorsäure und deren Salze, Propamocarb-Fosetylat, Propanosin-Natrium, Proquinazid, Pyrimorph, (2E)-3-(4-Tert-butylphenyl)-3-(2-chlorpyridin-4-yl)-1-(morpholin-4-yl)prop-2-en-1-on, (2Z)-3-(4-Tert-butylphenyl)-3-(2-chlorpyridin-4-yl)-1-(morpholin-4-yl)prop-2-en-1-on, Pyrrolnitrin, Tebufloquin, Tecloftalam, Tolnifanid, Triazoxid, Trichlamid, Zarilamid, (3S,6S,7R,8R)-8-Benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoat, 1-(4-{4-[(5R)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-{4-[(5S)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-{4-[5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, 1-(4-Methoxyphenoxy)-3,3-dimethylbutan-2-yl-1H-imidazol-1-carboxylat, 2,3,5,6-Tetrachlor-4-(methylsulfonyl)pyridin, 2,3-Dibutyl-6-chlorthieno[2,3-d]pyrimidin-4(3H)-on, 2,6-Dimethyl-1H,5H-[1,4]dithiino[2,3-c:5,6-c']dipyrrol-1,3,5,7(2H,6H)-tetron, 2-[5-Methyl-3-(trifluormethyl)-1H-pyrazol-1-yl]-1-(4-{4-[(5R)-5-phenyl-4,5-dihydro-1,2-oxazol-3-yl]-1,3-thiazol-2-yl}piperidin-1-yl)ethanon, 2-[5-Methyl-3-(trifluormethyl)-1H-pyrazol-1-yl]-1-(4-{4-[(5S)-5-phenyl-4,5-dihydro-1,2-oxazol-3-yl]-1,3-thiazol-2-yl}piperidin-1-yl)ethanon, 2-[5-Methyl-3-(trifluormethyl)-1H-pyrazol-1-yl]-1-{4-[4-(5-phenyl-4,5-dihydro-1,2-oxazol-3-yl)-1,3-thiazol-2-yl]piperidin-1-yl}ethanon, 2-Butoxy-6-iod-3-propyl-4H-chromen-4-on, 2-Chlor-5-[2-chlor-1-(2,6-difluor-4-methoxyphenyl)-4-methyl-1H-imidazol-5-yl]pyridin, 2-Phenylphenol und dessen Salze, 3-(4,4,5-Trifluor-3,3-dimethyl-3,4-dihydroisoquinolin-1-yl)quinolin, 3,4,5-Trichlorpyridin-2,6-dicarbonitril, 3-[5-(4-Chlorphenyl)-2,3-dimethyl-1,2-oxazolidin-3-yl]pyridin, 3-Chlor-5-(4-chlorphenyl)-4-(2,6-difluorphenyl)-6-methylpyridazin, 4-(4-Chlorphenyl)-5-(2,6-difluorphenyl)-3,6-dimethylpyridazin, 5-Amino-1,3,4-thiadiazol-2-thiol, 5-Chlor-N'-phenyl-N'-(prop-2-in-1-yl)thiophen-2-sulfonohydrazid, 5-Fluor-2-[(4-fluorbenzyl)oxy]pyrimidin-4-amin, 5-Fluor-2-[(4-methylbenzyl)oxy]pyrimidin-4-amin, 5-Methyl-6-octyl[1,2,4]triazolo[1,5-a]pyrimidin-7-amin, Ethyl-(2Z)-3-amino-2-cyan-3-phenylprop-2-enoat, N'-(4-{[3-(4-Chlorbenzyl)-1,2,4-thiadiazol-5-yl]oxy}-2,5-dimethylphenyl)-N-ethyl-N-methylimidoformamid, N-(4-Chlorbenzyl)-3-[3-methoxy-4-(prop-2-in-1-yloxy)phenyl]propanamid, N-[(4-Chlorphenyl)(cyan)methyl]-3-[3-methoxy-4-(prop-2-in-1-yloxy)phenyl]propanamid, N-[(5-Brom-3-chlorpyridin-2-yl)methyl]-2,4-dichlorpyridin-3-carboxamid, N-[1-(5-Brom-3-chlorpyridin-2-yl)ethyl]-2,4-dichlorpyridin-3-carboxamid, N-[1-(5-Brom-3-chlorpyridin-2-yl)ethyl]-2-fluor-4-iodpyridin-3-carboxamid, N-{(E)-[(Cyclopropylmethoxy)imino][6-(difluormethoxy)-2,3-difluorphenyl]methyl}-2-phenylacetamid, N-{(Z)-[(Cyclopropylmethoxy)imino][6-(difluormethoxy)-2,3-difluorphenyl]methyl}-2-phenylacetamid, N'-{4-[(3-Tert-butyl-4-cyano-1,2-thiazol-5-yl)oxy]-2-chlor-5-methylphenyl}-N-ethyl-N-methylimidoformamid, N-Methyl-2-(1-{[5-methyl-3-(trifluormethyl)-1H-pyrazol-1-yl]acetyl}piperidin-4-yl)-N-(1,2,3,4-tetrahydronaphthalen-1-yl)-1,3-thiazol-4-carboxamid, N-Methyl-2-(1-{[5-methyl-3-(trifluormethyl)-1H-pyrazol-1-yl]acetyl}piperidin-4-yl)-N-[(1R)-1,2,3,4-tetrahydronaphthalen-1-yl]-1,3-thiazol-4-carboxamid, N-Methyl-2-(1-{[5-methyl-3-(trifluormethyl)-1H-pyrazol-1-yl]acetyl}piperidin-4-yl)-N-[(1S)-1,2,3,4-tetrahydronaphthalen-1-yl]-1,3-thiazol-4-carboxamid, Pentyl-{6-[({[(1-methyl-1H-tetrazol-5-yl)(phenyl)methyliden]amino}oxy)methyl]pyridin-2-yl}carbamat, Phenazin-1-carbonsäure, Chinolin-8-ol, Chinolin-8-olsulfat(2:1) und Tert-butyl {6-[({[(1-methyl-1H-tetrazol-5-yl)(phenyl)methylen]amino}oxy)methyl]pyridin-2-yl}carbamat.
(16) Weitere Verbindungen, wie beispielsweise 1-Methyl-3-(trifluormethyl)-N-[2'-(trifluormethyl)biphenyl-2-yl]-1H-pyrazol-4-carboxamid, N-(4'-Chlorbiphenyl-2-yl)-3-(difluormethyl)-1-methyl-1H-pyrazol-4-carboxamid, N-(2',4'-Dichlorbiphenyl-2-yl)-3-(difluormethyl)-1-methyl-1H-pyrazol-4-carboxamid, 3-(Difluormethyl)-1-methyl-N-[4'-(trifluormethyl)biphenyl-2-yl]-1H-pyrazol-4-carboxamid, N-(2',5'-Difluorbiphenyl-2-yl)-1-methyl-3-(trifluormethyl)-1H-pyrazol-4-carboxamid, 3-(Difluormethyl)-1-methyl-N-[4'-(prop-1-in-1-yl)biphenyl-2-yl]-1H-pyrazol-4-carboxamid, 5-Fluor-1,3-dimethyl-N-[4'-(prop-1-in-1-yl)biphenyl-2-yl]-1H-pyrazol-4-carboxamid, 2-Chlor-N-[4'-(prop-1-in-1-yl)biphenyl-2-yl]pyridin-3-carboxamid, 3-(Difluormethyl)-N-[4'-(3,3-dimethylbut-1-in-1-yl)biphenyl-2-yl]-1-methyl-1H-pyrazol-4-carboxamid, N-[4'-(3,3-Dimethylbut-1-in-1-yl)biphenyl-2-yl]-5-fluor-1,3-dimethyl-1H-pyrazol-4-carboxamid, 3-(Difluormethyl)-N-(4'-ethinylbiphenyl-2-yl)-1-methyl-1H-pyrazol-4-carboxamid, N-(4'-Ethinylbiphenyl-2-yl)-5-fluor-1,3-dimethyl-1H-pyrazol-4-carboxamid, 2-Chlor-N-(4'-ethinylbiphenyl-2-yl)pyridin-3-carboxamid, 2-Chlor-N-[4'-(3,3-dimethylbut-1-in-1-yl)biphenyl-2-yl]pyridin-3-carboxamid, 4-(Difluormethyl)-2-methyl-N-[4'-(trifluormethyl)biphenyl-2-yl]-1,3-thiazol-5-carboxamid, 5-Fluor-N-[4'-(3-hydroxy-3-methylbut-1-in-1-yl)biphenyl-2-yl]-1,3-dimethyl-1H-pyrazol-4-carboxamid, 2-Chlor-N-[4'-(3-hydroxy-3-methylbut-1-in-1-yl)biphenyl-2-yl]pyridin-3-carboxamid, 3-(Difluormethyl)-N-[4'-(3-methoxy-3-methylbut-1-in-1-yl)biphenyl-2-yl]-1-methyl-1H-pyrazol-4-carboxamid, 5-Fluor-N-[4'-(3-methoxy-3-methylbut-1-in-1-yl)biphenyl-2-yl]-1,3-dimethyl-1H-pyrazol-4-carboxamid, 2-Chlor-N-[4'-(3-methoxy-3-methylbut-1-in-1-yl)biphenyl-2-yl]pyridin-3-carboxamid, (5-Brom-2-methoxy-4-methylpyridin-3-yl)(2,3,4-trimethoxy-6-methylphenyl)methanon, N-[2-(4-{[3-(4-Chlorphenyl)prop-2-in-1-yl]oxy}-3-methoxyphenyl)ethyl]-N2-(methylsulfonyl)valin-amid, 4-Oxo-4-[(2-phenylethyl)amino]butansäure und But-3-yn-1-yl {6-[({[(Z)-(1-methyl-1H-tetrazol-5-yl)(phenyl)methylen]amino}oxy)methyl]pyridin-2-yl}carbamat.

Als Beispiele für Bakterizide seien genannt:
Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Als Beispiele für Insektizide, Akarizide und Nematizide seien genannt:
(1) Acetylcholinesterase (AChE) Inhibitoren, wie Carbamate, z.B. Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC und Xylylcarb; oder Organophosphate, z.B. Acephate, Azamethiphos, Azinphos-ethyl, Azinphosmethyl, Cadusafos, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Imicyafos, Isofenphos, Isopropyl O-(methoxyaminothio-phosphoryl) salicylat, Isoxathion, Malathion, Mecarbam, Methamidophos, Methidathion, Mevinphos, Monocrotophos, Naled, Omethoate, Oxydemeton-methyl, Parathion, Parathion-methyl, Phenthoate, Phorate, Phosalone, Phosmet, Phosphamidon, Phoxim, Pirimiphos-methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triclorfon und Vamidothion.
(2) GABA-gesteuerte Chlorid-Kanal-Antagonisten, wie beispielsweise Cyclodien-organochlorine, z.B. Chlordane und Endosulfan; oder Phenylpyrazole (Fiprole), z.B. Ethiprole und Fipronil.
(3) Natrium-Kanal-Modulatoren / Spannungsabhängige Natrium-Kanal-Blocker, wie beispielsweise Pyrethroide, z.B. Acrinathrin, Allethrin, d-cis-trans Allethrin, d-trans Allethrin, Bifenthrin, Bioallethrin, Bioallethrin S-cyclopentenyl Isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans-Isomere], Deltamethrin, Empenthrin [(EZ)-(1R)-Isomere), Esfenvalerate, Etofenprox, Fenpropathrin, Fenvalerate, Flucythrinate, Flumethrin, tau-Fluvalinate, Halfenprox, Imiprothrin, Kadethrin, Permethrin, Phenothrin [(1R)-trans-Isomer), Prallethrin, Pyrethrine (pyrethrum), Resmethrin, Silafluofen, Tefluthrin, Tetramethrin, Tetramethrin [(1R)-Isomere)], Tralomethrin und Transfluthrin; oder DDT; oder Methoxychlor.
(4) Nikotinerge Acetylcholin-Rezeptor (nAChR) Agonisten, wie beispielsweise Neonikotinoide, z.B. Acetamiprid, Clothianidin, Dinotefuran, Imidacloprid, Nitenpyram, Thiacloprid und Thiamethoxam; oder Nikotin.
(5) Nikotinerge Acetylcholin-Rezeptor (nAChR) allosterische Aktivatoren, wie beispielsweise Spinosine, z.B. Spinetoram und Spinosad.
(6) Chlorid-Kanal-Aktivatoren, wie beispielsweise Avermectine/Milbemycine, z.B. Abamectin, Emamectin-benzoat, Lepimectin und Milbemectin.
(7) Juvenilhormon-Imitatoren, wie beispielsweise Juvenilhormon-Analoge, z.B. Hydroprene, Kinoprene und Methoprene; oder Fenoxycarb; oder Pyriproxyfen.
(8) Wirkstoffe mit unbekannten oder nicht spezifischen Wirkmechanismen, wie beispielsweise Alkylhalide, z.B. Methylbromid und andere Alkylhalide; oder Chloropicrin; oder Sulfurylfluorid; oder Borax; oder Brechweinstein.
(9) Selektive Fraßhemmer, z.B. Pymetrozine; oder Flonicamid.
(10) Milbenwachstumsinhibitoren, z.B. Clofentezine, Hexythiazox und Diflovidazin; oder Etoxazole.
(11) Mikrobielle Disruptoren der Insektendarmmembran, z.B. Bacillus thuringiensis Subspezies israelensis, Bacillus sphaericus, Bacillus thuringiensis Subspezies aizawai, Bacillus thuringiensis Subspezies kurstaki, Bacillus thuringiensis Subspezies tenebrionis und BT Pflanzenproteine: Cry1Ab, Cry1Ac, Cry1Fa, Cry2Ab, mCry3A, Cry3Ab, Cry3Bb, Cry34/35Ab1.
(12) Inhibitoren der oxidativen Phosphorylierung, ATP-Disruptoren, wie beispielsweise Diafenthiuron; oder Organozinnverbindungen, z.B. Azocyclotin, Cyhexatin und Fenbutatin-oxid; oder Propargite; oder Tetradifon.
(13) Entkoppler der oxidativen Phoshorylierung durch Unterbrechung des H-Protongradienten, wie beispielsweise Chlorfenapyr, DNOC und Sulfluramid.
(14) Nikotinerge Acetylcholin-Rezeptor-Antagonisten, wie beispielsweise Bensultap, Cartap-hydrochlorid, Thiocyclam und Thiosultap-Natrium.
(15) Inhibitoren der Chitinbiosynthese, Typ 0, wie beispielsweise Bistrifluron, Chlorfluazuron, Diflubenzuron, Flucycloxuron, Flufenoxuron, Hexaflumuron, Lufenuron, Novaluron, Noviflumuron, Teflubenzuron und Triflumuron.
(16) Inhibitoren der Chitinbiosynthese, Typ 1, wie beispielsweise Buprofezin.
(17) Häutungsstörende Wirkstoffe, Dipteran, wie beispielsweise Cyromazine.
(18) Ecdyson-Rezeptor Agonisten, wie beispielsweise Chromafenozide, Halofenozide, Methoxyfenozide und Tebufenozide.
(19) Oktopaminerge Agonisten, wie beispielsweise Amitraz.
(20) Komplex-III-Elektronentransportinhibitoren, wie beispielsweise Hydramethylnon; oder Acequinocyl; oder Fluacrypyrim.
(21) Komplex-I-Elektronentransportinhibitoren, beispielsweise METI-Akarizide, z.B. Fenazaquin, Fenpyroximate, Pyrimidifen, Pyridaben, Tebufenpyrad und Tolfenpyrad; oder Rotenone (Derris).
(22) Spannungsabhängige Natriumkanal-Blocker, z.B. Indoxacarb; oder Metaflumizone.
(23) Inhibitoren der Acetyl-CoA-Carboxylase, wie beispielsweise Tetron- und Tetramsäurederivate, z.B. Spirodiclofen, Spiromesifen und Spirotetramat.
(24) Komplex-IV-Elektronentransportinhibitoren, wie beispielsweise Phosphine, z.B. Aluminiumphosphid, Calciumphosphid, Phosphin und Zinkphosphid; oder Cyanid.
(25) Komplex-II-Elektronentransportinhibitoren, wie beispielsweise Cyenopyrafen.
(28) Ryanodinrezeptor-Effektoren, wie beispielsweise Diamide, z.B. Chlorantraniliprole und Flubendiamide.

Weitere Wirkstoffe mit unbekanntem Wirkmechanismus, wie beispielsweise Amidoflumet, Azadirachtin, Benclothiaz, Benzoximate, Bifenazate, Bromopropylate, Chinomethionat, Cryolite, Cyantraniliprole (Cyazypyr), Cyflumetofen, Dicofol, Diflovidazin, Fluensulfone, Flufenerim, Flufiprole, Fluopyram, Fufenozide, Imidaclothiz, Iprodione, Pyridalyl, Pyrifluquinazon und Iodmethan; sowie des weiteren Präparate auf Basis von Bacillus firmus (I-1582, BioNeem, Votivo).

Als Beispiele für Herbizide seien genannt:
Acetochlor, Acibenzolar, Acibenzolar-S-methyl, Acifluorfen, Acifluorfen-sodium, Aclonifen, Alachlor, Allidochlor, Alloxydim, Alloxydim-sodium, Ametryn, Amicarbazone, Amidochlor, Amidosulfuron, Aminocyclopyrachlor, Aminocyclopyrachlor-kalium, Aminocyclopyrachlor-methyl, Aminopyralid, Amitrole, Ammoniumsulfamat, Ancymidol, Anilofos, Asulam, Atrazine, Aviglycin, Azafenidin, Azimsulfuron, Aziprotryn, Beflubutamid, Benazolin, Benazolin-ethyl, Bencarbazone, Benfluralin, Benfuresate, Bensulide, Bensulfuron, Bensulfuronmethyl, Bentazone, Benzfendizone, Benzobicyclon, Benzofenap, Benzofluor, Benzoylprop, Benzyladenin, Bicyclopyrone, Bifenox, Bilanafos, Bilanafos-natrium, Bispyribac, Bispyribac-natrium, Bromacil, Bromobutide, Bromofenoxim, Bromoxynil, Bromuron, Buminafos, Busoxinone, Butachlor, Butafenacil, Butamifos, Butenachlor, Butralin, Butroxydim, Butylate, Cafenstrole, Carbaryl, Carbetamide, Carfentrazone, Carfentrazone-ethyl, Carvone, Chlorcholinchlorid, Chlomethoxyfen, Chloramben, Chlorazifop, Chlorazifop-butyl, Chlorbromuron, Chlorbufam, Chlorfenac, Chlorfenac-natrium, Chlorfenprop, Chlorflurenol, Chlorflurenol-methyl, Chloridazon, Chlorimuron, Chlorimuron-ethyl, Chlormequat-chlorid, Chlornitrofen, 4-Chlorophenoxyacetic acid, Chlorophthalim, Chlorpropham, Chlorthal-dimethyl, Chlorotoluron, Chlorsulfuron, Cinidon, Cinidon-ethyl, Cinmethylin, Cinosulfuron, Clethodim, Clodinafop, Clodinafop-propargyl, Clofencet, Clomazone, Clomeprop, Cloprop, Clopyralid, Cloransulam, Cloransulam-methyl, Cloxyfonac, Cumyluron, Cyanamide, Cyanazine, Cyclanilide, Cycloate, Cyclosulfamuron, Cycloxydim, Cycluron, Cyhalofop, Cyhalofop-butyl, Cyperquat, Cyprazine, Cyprazole, Cytokinine, 2,4-D, 2,4-DB, Daimuron/Dymron, Dalapon, Daminozide, Dazomet, n-Decanol, Desmedipham, Desmetryn, Detosyl-Pyrazolate (DTP), Diallate, Diaminozid, Dicamba, Dichlobenil, Dichlorprop, Dichlorprop-P, Diclofop, Diclofopmethyl, Diclofop-P-methyl, Diclosulam, Diethatyl, Diethatyl-ethyl, Difenoxuron, Difenzoquat, Diflufenican, Diflufenzopyr, Diflufenzopyr-natrium, Dikegulac-sodium, Dimefuron, Dimepiperate, Dimethachlor, Dimethametryn, Dimethenamid, Dimethenamid-P, Dimethipin, Dimetrasulfuron, Dinitramine, Dinoseb, Dinoterb, Diphenamid, Diisopropylnaphthalene, Dipropetryn, Diquat, Diquat-dibromide, Dithiopyr, Diuron, DNOC, Eglinazine-ethyl, Endothal, EPTC, Esprocarb, Ethalfluralin, Ethametsulfuron, Ethametsulfuron-methyl, Ethylnaphthylacetat, Ethephon, Ethidimuron, Ethiozin, Ethofumesate, Ethoxyfen, Ethoxyfen-ethyl, Ethoxysulfuron, Etobenzanid, F-5331, d.h. N-[2-Chlor-4-fluor-5-[4-(3-fluorpropyl)-4,5-dihydro-5-oxo-1H-tetrazol-1-yl]-phenyl]-ethansulfonamid, F-7967, d. h. 3-[7-Chlor-5-fluor-2-(trifluormethyl)-1H-benzimidazol-4-yl]-1-methyl-6-(trifluormethyl) pyrimidin-2,4(1H,3H)-dion, Fenoprop, Fenoxaprop, Fenoxaprop-P, Fenoxaprop-ethyl, Fenoxaprop-P-ethyl, Fenoxasulfone, Fentrazamide, Fenuron, Flamprop, Flamprop-M-isopropyl, Flamprop-M-methyl, Flazasulfuron, Florasulam, Fluazifop, Fluazifop-P, Fluazifop-butyl, Fluazifop-P-butyl, Fluazolate, Flucarbazone, Flucarbazone-sodium, Flucetosulfuron, Fluchloralin, Flufenacet (Thiafluamide), Flufenpyr, Flufenpyr-ethyl, Flumetralin, Flumetsulam, Flumiclorac, Flumiclorac-pentyl, Flumioxazin, Flumipropyn, Fluometuron, Fluorodifen, Fluoroglycofen, Fluoroglycofen-ethyl, Flupoxam, Flupropacil, Flupropanate, Flupyrsulfuron, Flupyrsulfuron-methyl-sodium, Flurenol, Flurenol-butyl, Fluridone, Flurochloridone, Fluroxypyr, Fluroxypyr-meptyl, Flurprimidol, Flurtamone, Fluthiacet, Fluthiacet-methyl, Fluthiamide, Fomesafen, Foramsulfuron, Forchlorfenuron, Fosamine, Furyloxyfen, Gibberellinsäure, Glufosinate, Glufosinate-ammonium, Glufosinate-P, Glufosinate-P-ammonium, Glufosinate-P-natrium, Glyphosate, Glyphosate-isopropylammonium, H-9201, d. h. O-(2,4-Dimethyl-6-nitrophenyl)-O-ethyl-isopropylphosphor amidothioat, Halosafen, Halosulfuron, Halosulfuron-methyl, Haloxyfop, Haloxyfop-P, Haloxyfopethoxyethyl, Haloxyfop-P-ethoxyethyl, Haloxyfop-methyl, Haloxyfop-P-methyl, Hexazinone, HW-02, d. h. 1-(Dimethoxyphosphoryl)-ethyl-(2,4-dichlorphenoxy)acetat, Imazamethabenz, Imazamethabenz-methyl, Imazamox, Imazamox-ammonium, Imazapic, Imazapyr, Imazapyr-isopropylammonium, Imazaquin, Imazaquin-ammonium, Imazethapyr, Imazethapyr-ammonium, Imazosulfuron, Inabenfide, Indanofan, Indaziflam, Indolessigsäure (IAA), 4-Indol-3-ylbuttersäure (IBA), Iodosulfuron, Iodosulfuron-methyl-natrium, Iofensulfuron, lofensulfuron-natrium, Ioxynil, Ipfencarbazone, Isocarbamid, Isopropalin, Isoproturon, Isouron, Isoxaben, Isoxachlortole, Isoxaflutole, Isoxapyrifop, KUH-043, d. h. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, Karbutilate, Ketospiradox, Lactofen, Lenacil, Linuron, Maleinsäurehydrazid, MCPA, MCPB, MCPB-methyl, -ethyl und -natrium, Mecoprop, Mecoprop-natrium, Mecoprop-butotyl, Mecoprop-P-butotyl, Mecoprop-P-dimethylammonium, Mecoprop-P-2-ethylhexyl, Mecoprop-P-kalium, Mefenacet, Mefluidide, Mepiquat-chlorid, Mesosulfuron, Mesosulfuronmethyl, Mesotrione, Methabenzthiazuron, Metam, Metamifop, Metamitron, Metazachlor, Metazasulfuron, Methazole, Methiopyrsulfuron, Methiozolin, Methoxyphenone, Methyldymron, 1-Methylcyclopropen, Methylisothiocyanat, Metobenzuron, Metobromuron, Metolachlor, S-Metolachlor, Metosulam, Metoxuron, Metribuzin, Metsulfuron, Metsulfuron-methyl, Molinate, Monalide, Monocarbamide, Monocarbamide-dihydrogensulfat, Monolinuron, Monosulfuron, Monosulfuron-ester, Monuron, MT-128, d. h. 6-Chlor-N-[(2E)-3-chlorprop-2-en-1-yl]-5-methyl-N-phenylpyridazin-3-amin, MT-5950, d. h. N-[3-Chlor-4-(1-methylethyl)-phenyl]-2-methylpentanamid, NGGC-011, 1-Naphtylacetic Acid (NAA), Naphthylacetamid (NAAm), 2-Naphtoxyacetic Acid, Naproanilide, Napropamide, Naptalam, NC-310, d.h. 4-(2,4-Dichlorobenzoyl)-1-methyl-5-benzyloxypyrazole, Neburon, Nicosulfuron, Nipyraclofen, Nitralin, Nitrofen, Nitroguaiacolate, Nitrophenolat-natrium (Isomerengemisch), Nitrofluorfen, Nonansäure, Norflurazon, Orbencarb, Orthosulfamuron, Oryzalin, Oxadiargyl, Oxadiazon, Oxasulfuron, Oxaziclomefone, Oxyfluorfen, Paclobutrazol, Paraquat, Paraquat-dichlorid, Pelargonsäure (Nonansäure), Pendimethalin, Pendralin, Penoxsulam, Pentanochlor, Pentoxazone, Perfluidone, Pethoxamid, Phenisopham, Phenmedipham, Phenmedipham-ethyl, Picloram, Picolinafen, Pinoxaden, Piperophos, Pirifenop, Pirifenop-butyl, Pretilachlor, Primisulfuron, Primisulfuron-methyl, Probenazole, Profluazol, Procyazine, Prodiamine, Prifluraline, Profoxydim, Prohexadione, Prohexadione-calcium, Prohydrojasmone, Prometon, Prometryn, Propachlor, Propanil, Propaquizafop, Propazine, Propham, Propisochlor, Propoxycarbazone, Propoxycarbazone-natrium, Propyrisulfuron, Propyzamide, Prosulfalin, Prosulfocarb, Prosulfuron, Prynachlor, Pyraclonil, Pyraflufen, Pyraflufen-ethyl, Pyrasulfotole, Pyrazolynate (Pyrazolate), Pyrazosulfuron, Pyrazosulfuron-ethyl, Pyrazoxyfen, Pyribambenz, Pyribambenzisopropyl, Pyribambenz-propyl, Pyribenzoxim, Pyributicarb, Pyridafol, Pyridate, Pyriftalid, Pyriminobac, Pyriminobac-methyl, Pyrimisulfan, Pyrithiobac, Pyrithiobacnatrium, Pyroxasulfone, Pyroxsulam, Quinclorac, Quinmerac, Quinoclamine, Quizalofop, Quizalofop-ethyl, Quizalofop-P, Quizalofop-P-ethyl, Quizalofop-P-tefuryl, Rimsulfuron, Saflufenacil, Secbumeton, Sethoxydim, Siduron, Simazine, Simetryn, SN-106279, d. h. Methyl-(2R)-2-({7-[2-chlor-4-(trifluormethyl)phenoxy]-2-naphthyl}oxy)propanoat, Sulcotrione, Sulfallate (CDEC), Sulfentrazone, Sulfometuron, Sulfometuron-methyl, Sulfosate (Glyphosate-trimesium), Sulfosulfuron, SW-065, SYN-523, SYP-249, d. h. 1-Ethoxy-3-methyl-1-oxobut-3-en-2-yl-5-[2-chlor-4-(trifluormethyl)phenoxy]-2-nitrobenzoat, SYP-300, d. h. 1-[7-Fluor-3-oxo-4-(prop-2-in-1-yl)-3,4-dihydro-2H-1,4-benzoxazin-6-yl]-3-propy1-2-thioxoimidazolidin-4,5-dion, Tebutam, Tebuthiuron, Tecnazene, Tefuryltrione, Tembotrione, Tepraloxydim, Terbacil, Terbucarb, Terbuchlor, Terbumeton, Terbuthylazine, Terbutryn, Thenylchlor, Thiafluamide, Thiazafluron, Thiazopyr, Thidiazimin, Thidiazuron, Thiencarbazone, Thiencarbazone-methyl, Thifensulfuron, Thifensulfuron-methyl, Thiobencarb, Tiocarbazil, Topramezone, Tralkoxydim, Triafamone, Triallate, Triasulfuron, Triaziflam, Triazofenamide, Tribenuron, Tribenuron-methyl, Tribufos, Trichloressigsäure (TCA), Triclopyr, Tridiphane, Trietazine, Trifloxysulfuron, Trifloxysulfuron-natrium, Trifluralin, Triflusulfuron, Triflusulfuron-methyl, Trimeturon, Trinexapac, Trinexapac-ethyl, Tritosulfuron, Tsitodef, Uniconazole, Uniconazole-P und Vernolate, ZJ-0862, d.h. 3,4-Dichlor-N-{2-[(4,6-dimethoxypyrimidin-2-yl)oxy]benzyl}anilin.
Als Beispiele für Pflanzenwuchsregulatoren seien ferner genannt natürliche Pflanzenhormone wie Abszisinsäure Jasmonsäure, Salicylsäure bzw. deren Ester, Kinetin und Brassinosteroide.
Besonders bevorzugt handelt es sich bei den Pestiziden um CyclohexenoximHerbizide, Glycinderivat-Herbizide, Isoxazolidinon-Herbizide, Phenoxyessigsäureherbizide, Phenypyrazolinherbizide, SulfonylharnstoffHerbizide, Triketonherbizide, Triazolfungizide, Strobilurinfungizide, Neonicotinoidinsektizide, Organophosphatinsektizide, Pyrethroid-Insektizide.
Insbesondere bevorzugt handelt es sich bei den Pestiziden um Tebuconazol, Propiconazol, Epoxiconazol, Prothioconazol, Cyproconazol, Azoxystrobin, Trifloxystrobin, Imidacloprid, Thiacloprid, Chlorpyrifos, Chlorpyrifos-methyl, isomere Cypermethrine, isomere Cyhalothrine, 2,4-D-Ester, Clomazon, Clethodim, Nicosulfuron, Iodosulfuron und Mesosulfuron.
Besonders bevorzugt ist auch das Herbizid Glyphosate, insbesondere in Kombination mit dem bevorzugten Copolymer A) oder den bevorzugten Zusammensetzungen.
Das eine oder die mehreren Copolymere der Komponente A) können in den erfindungsgemäß eingesetzten Pestizid-Zusammensetzungen mehrere Zwecke erfüllen. Aufgrund ihrer chemischen Struktur können sie vor allem als Emulgator, Netz- oder Dispergiermittel wirken. Letzteres ist vor allem für Öldispersionen von Relevanz.

Das eine oder die mehreren Copolymere der Komponente A) und/oder Komponenten des Flüssigmediums B) können auch zur Erhöhung der biologischen Wirksamkeit des Pestizids beitragen, also als Adjuvantien fungieren. Unter einem Adjuvant versteht man Hilfsstoffe, die die biologische Wirksamkeit der Wirkstoffe erhöhen, ohne selbst eine biologische Wirkung zu zeigen, indem sie beispielsweise die Benetzung, die Retention oder die Aufnahme in die Pflanze oder den Zielorganismus verbessern.

Die erfindungsgemäß eingesetzten Pestizid-Zusammensetzungen können gegebenenfalls weitere Hilfsstoffe wie Verdickungsmittel, Dispergiermittel, Netzmittel, Emulgatoren, Konservierungsmittel, Adjuvants, Penetrationsförderer, Kältestabilisatoren, Farbmittel, Entschäumer und Antioxidantien enthalten.

Als Verdickungsmittel können alle üblicherweise für diesen Zweck in agrochemischen Formulierungen einsetzbaren Substanzen wie Xanthan gum, Cellulose, beispielsweise Carboxy-, Methyl-, Ethyl- oder Propylcellulose, (gegebenenfalls modifizierte) Bentonite, (gegebenenfalls oberflächenmodifiziertes) Siliziumdioxid eingesetzt werden.

Als zusätzliche Lösemittel eignen sich alle üblicherweise für diesen Zweck in agrochemischen Formulierungen einsetzbaren Substanzen, dabei kann es sich auch um mit Wasser mischbare Lösemittel handeln, solange sie wasserfrei sind. Beispiele für weitere Lösemittel sind Alkane, Alkohole, von der Komponente B) unterschiedliche Ester, Ketone wie Cyclohexanon, Acetophenon, Amide wie Octan-, Decan- und Dodecansäuredimethylamid, Milchsäuredimethylamid, Ether, Phosphorsäureester wie Tris(ethylhexyl)phosphat, Phosphonsäureester wie Ethylhexylphosphonsäure-bis(ethylhexyl)ester, Pyrrolidone wie N-Methyl und N-Ethylpyrrolidon, Butyrolacton, Ester der Kohlensäure wie Propylencarbonat, Glykole oder Polyglykole.

Als Dispergiermittel und Netzmittel eignen sich alle üblicherweise für diesen Zweck in agrochemischen Formulierungen einsetzbaren Substanzen, wie nichtionische, amphotere, kationische und anionische (polymere) Tenside.

Bevorzugt als Dispergiermittel und Netzmittel sind Fettalkoholethoxylate, Fettalkoholalkoxylate, EO/PO-Blockcopolymere (EO: Ethylenoxy-Einheit; PO: Propylenoxy-Einheit), Alkylarylsufonsäuren, Alkylsulfonsäuren, Sulfonsäuren ethoxylierter Alkohole, Sulfosuccinate, Fettsäuremethyltauride, Tristyrylphenolethoxylate und -alkoxylate, Tri-sec-butylphenolethoxylate, Sulfatierte Cresol-Formaldehyd Kondensationsprodukte, sulfatierte Kondensationsprodukte von Naphthalin und Alkylnaphthalinen, Ligninsulfonate, Phosphorsäureester von ethoxylierten Fettalkoholen, Tristyrylphenolen und Tri-sec-butylphenolen sowie Ethersulfate von ethoxylierten Fettalkoholen, Tristyrylphenolen und Tri-sec-butylphenolen und polymere Dispergiermittel.

Als Emulgatoren eignen sich nicht-ionische und anionische Emulgatoren wie Ethoxylate oder Alkoxylate von langkettigen (C₈ bis C₂₄) linearen oder verzweigten Alkoholen, EO/PO-Blockcopolymere (EO: Ethylenoxy-Einheit; PO: Propylenoxy-Einheit), Alkylphenol- oder Tristyrylphenolethoxylate und -alkoxylate, Tri-sec-butylphenolethoxylate, Rizinusölethoxylate, Ester von langkettigen Carbonsäuren mit ein- oder mehrwertigen Alkoholen sowie deren Ethoxylierungsprodukte, Salze der Dodecylbenzolsulfonsäure, Sulfosuccinate, Phosphorsäureester von ethoxylierten Fettalkoholen, Tristyrylphenolen und Tri-sec-butylphenolen und deren Salze.

Als Konservierungsmittel können alle üblicherweise für diesen Zweck in agrochemischen Formulierungen einsetzbaren Substanzen wie organische Säuren und ihre Ester, beispielsweise Ascorbinsäure, Ascorbinpalmitat, Sorbat, Benzoesäure, Methyl- und Propyl-4-hydroxybenzoat, Propionate, Phenol, beispielsweise 2-Phenylphenat, 1,2-Benzisothiazolin-3-on, Formaldehyd, eingesetzt werden.

Als gegebenenfalls weitere Adjuvantien können alle üblicherweise für diesen Zweck in agrochemischen Formulierungen einsetzbaren Substanzen wie Alkoholalkoxylate, Fettaminethoxylate, Ester der phosphorigen Säure oder der Phosphorsäure wie Ethylhexylphosphonsäure-bis(ethylhexyl)ester oder Tris(ethylhexyl)phosphat, Sorbitan- und Sorbitolethoxylatderivate eingesetzt werden.

Als Penetrationsförderer eignen sich alle Substanzen, die üblicherweise eingesetzt werden, um das Eindringen von Pestiziden in Pflanzen oder in Zielorganismen zu verbessern. Penetrationsförderer können beispielsweise dadurch definiert werden, dass sie aus der wässrigen Spritzbrühe und/oder aus einem Spritzbelag auf der Pflanzenoberfläche in die Kutikula der Pflanze eindringen und dadurch die Stoffbeweglichkeit (Mobilität) von Wirkstoffen in der Kutikula erhöhen können. Die in der Literatur beschriebene Methode kann zur Bestimmung dieser Eigenschaft eingesetzt werden (Baur et al., 1997, Pesticide Science 51, 131-152).

Als Kältestabilisatoren können alle üblicherweise für diesen Zweck in agrochemischen Formulierungen einsetzbaren Stoffe fungieren. Beispielhaft seien Harnstoff, Glycerin und Propylenglykol genannt.

Geeignete Farbmittel sind alle üblicherweise für diesen Zweck in agrochemischen Formulierungen einsetzbaren Substanzen wie öllösliche Farbstoffe, sowie organische oder anorganische Pigmente.

Als Entschäumer eignen sich alle üblicherweise für diesen Zweck in agrochemischen Formulierungen einsetzbaren Substanzen, wie Fettsäurealkylesteralkoxylate; Organopolysiloxane wie Polydimethylsiloxane und deren Gemische mit mikrofeiner, gegebenenfalls silanierter Kieselsäure; Perfluoralkylphosphonate und -phosphinate; Paraffine; Wachse und Mikrokristallinwachse und deren Gemische mit silanierter Kieselsäure. Vorteilhaft sind auch Gemische verschiedener Schauminhibitoren, beispielsweise solche aus Silikonöl, Paraffinöl und/oder oder Wachsen.

Als Antioxidantien kommen alle üblicherweise für diesen Zweck in agrochemischen Formulierungen einsetzbaren Substanzen in Betracht, wie beispielsweise BHT (2,6-Di-tert.-butyl-4-methylphenol).

Der Anteil des einen oder der mehreren Copolymere der Komponente A) in den erfindungsgemäß eingesetzten Pestizid-Zusammensetzungen beträgt vorzugsweise 0,1 bis 40 Gew.-%, besonders bevorzugt 0,5 bis 30 Gew.-% und insbesondere bevorzugt 1 bis 20 Gew.-%. Diese Mengenangaben sind auf das Gesamtgewicht der erfindungsgemäß eingesetzten Pestizid-Zusammensetzungen bezogen.

Weiterhin beträgt der Anteil des einen oder der mehreren Pestizide in den erfindungsgemäß eingesetzten Pestizid-Zusammensetzungen vorzugsweise 0,1 bis 75 Gew.-%, besonders bevorzugt 5 bis 50 Gew.-% und insbesondere bevorzugt 10 bis 40 Gew.-%. Diese Mengenangaben sind auf das Gesamtgewicht der erfindungsgemäß eingesetzten Pestizid-Zusammensetzungen bezogen.

In erfindungsgemäß eingesetzten Pestizid-Zusammensetzungen, welche das Flüssigmedium B enthalten, beträgt der Anteil des einen oder der mehreren nicht mit Wasser mischbaren Lösemittel der Komponente B) vorzugsweise 1 bis 99,8 Gew.-%, besonders bevorzugt 5 bis 80 Gew.-% und insbesondere bevorzugt 10 bis 70 Gew.-%. Diese Mengenangaben sind auf das Gesamtgewicht der erfindungsgemäß eingesetzten Pestizid-Zusammensetzungen bezogen.

Die erfindungsgemäß eingesetzten Copolymere oder Zusammensetzungen können auch zur Herstellung von wasserfreien Zusammensetzungen, enthaltend ein oder mehrere Pestizide und gleichzeitig eine oder mehrere oberflächenaktive Substanzen, verwendet werden. Hierbei resultieren Zusammensetzungen, die ein oder mehrere Pestizide und eine oder mehrere oberflächenaktive Substanzen enthalten.

In einer weiteren bevorzugten Ausführungsform der Erfindung enthalten die erfindungsgemäß eingesetzten Zusammensetzungen bzw. Zubereitungen enthaltend Copolymere A) aber kein Flüssigmedium B), daher zusätzlich ein oder mehrere Pestizide und eine oder mehrere oberflächenaktive Substanzen. Derartige Zusammensetzungen werden im Folgenden auch als "erfindungsgemäß eingesetzte oberflächenaktive Substanzen enthaltende Pestizidzusammensetzungen" bezeichnet.

In den erfindungsgemäß eingesetzten oberflächenaktiven Substanzen enthaltenden Pestizidzusammensetzungen beträgt
- der Anteil des einen oder der mehreren Copolymere der Komponente A) vorzugsweise 0,1 bis 40 Gew.-%, besonders bevorzugt 0,5 bis 30 Gew.-% und insbesondere bevorzugt 1 bis 20 Gew.-%,
- der Anteil des einen oder der mehreren Pestizide vorzugsweise 0,1 bis 75 Gew.-%, besonders bevorzugt 5 bis 50 Gew.-% und insbesondere bevorzugt 10 bis 40 Gew.-% und
- der Anteil der einen oder der mehreren oberflächenaktiven Substanzen vorzugsweise 0,1 bis 30 Gew.-%, besonders bevorzugt 0,5 bis 25 Gew-% und insbesondere bevorzugt 1 bis 20 Gew.-%. Diese Mengenangaben sind auf das Gesamtgewicht der erfindungsgemäß eingesetzten oberflächenaktive Substanzen enthaltenden Pestizidzusammensetzungen bezogen.

In erfindungsgemäß eingesetzten oberflächenaktive Substanzen enthaltenden Pestizidzusammensetzungen, welche ein Flüssigmedium B) enthalten, beträgt der Anteil des Flüssigmedium der Komponente B) vorzugsweise 1 bis 99,7 Gew.-%, besonders bevorzugt 5 bis 80 Gew.-% und insbesondere bevorzugt 10 bis 70 Gew.-%. Diese Mengenangaben sind auf das Gesamtgewicht der erfindungsgemäß eingesetzten oberflächenaktive Substanzen enthaltenden Pestizidzusammensetzungen bezogen.

Die Herstellung der erfindungsgemäß eingesetzten Pestizid-Zusammensetzungen ist je nach Formulierungstyp auf verschiedenen Wegen möglich, welche dem Fachmann hinlänglich bekannt sind. Auch die Herstellung der erfindungsgemäß eingesetzten Adjuvant-Zusammensetzungen ist auf verschiedenen Wegen möglich, welche dem Fachmann hinlänglich bekannt sind. Gleiches gilt für die Herstellung der erfindungsgemäß eingesetzten oberflächenaktive Substanzen enthaltenden Pestizidzusammensetzungen und für die Herstellung von wässrigen Emulsionen aus erfindungsgemäß eingesetzten Zusammensetzungen.

Bei der erfindungsgemäßen Verwendung werden Pestizid-Zusammensetzungen in Form von Spritzbrühen ausgebracht. Dabei wird eine Spritzbrühe bevorzugt durch Verdünnung einer Konzentrat-Formulierung, beispielsweise eines erfindungsgemäß eingesetzten Emulsionskonzentrats oder einer erfindungsgemäß eingesetzten Öldispersion, mit einer definierten Menge Wasser hergestellt.

Weiterhin Gegenstand der Erfindung ist ein Verfahren zur Verminderung des Drifts bei der Applikation von Pestizidzubereitungen, wobei eine vorzugsweise wässrige Spritzbrühe auf die zu behandelnden Pflanzen oder deren Ort aufgesprüht wird, wobei die pestizidhaltige Spritzbrühe ein oder mehrere Copolymere A) oder eine erfindungsgemäß eingesetzte Zusammensetzung enthält.

### Beispiele

Im Folgenden wird die Erfindung anhand von Beispielen verdeutlicht, die jedoch keinesfalls als Einschränkung anzusehen sind.

Bei den eingesetzten Handelsprodukten handelt es sich um:
- Emulsogen^{®} TS 200: Tristyrylphenolethoxylat (20 EO) der Firma Clariant
- Emulsogen^{®} EP 4901: butanolbasiertes EO/PO-Copolymer der Firma Clariant
- Emulsogen^{®} 3510: butanolbasiertes EO/PO-Copolymer der Firma Clariant
- Emulsogen^{®} EL 360: ethoxyliertes Castoröl (36 EO) der Firma Clariant
- Emulsogen^{®} EL 400: ethoxyliertes Castoröl (40 EO) der Firma Clariant
- Emulsogen^{®} ELO: modifiziertes Castorölethoxylat der Firma Clariant
- Genapol^{®} C 030: ethoxylierter Cocosfettalkohol (3 EO) der Firma Clariant
- Marcol^{®} 82: Mineralöl der Firma Exxon
- Phenylsulfonat CA: verzweigtes Ca-Dodecylbenzylsulfonat in iso-Butanol der Firma Clariant (70 Gew.-%ig)
- Phenylsulfonat CAL: lineares Ca-Dodecylbenzylsulfonat in iso-Butanol der Firma Clariant (70 Gew.-%ig)
- Solvesso^{®} 200 ND: aromatisches Kohlenwasserstoffgemisch der Firma Exxon (Solvent Naphtha)
- Solvesso^{®} 150: aromatisches Kohlenwasserstoffgemisch der Firma Exxon (Solvent Naphtha)
- Synergen^{®} KN: Fungizid-Adjuvant der Firma Clariant (100 %ig)

### Herstellungsbeispiele

Allgemeine Vorschrift zur Herstellung der Copolymere 1 bis 7:

Die Herstellung der Copolymere erfolgt in zwei Schritten, wobei im ersten Schritt Glycerin zum entsprechenden Polyglycerin kondensiert wird, das anschließend mit Monocarbonsäure und Dicarbonsäure zum Copolymer umgesetzt wird.

Herstellung von Polyglycerin (n = 9,7): 2000 g Glycerin und 6,0 g NaOH (50 Gew.-% in Wasser) wurden in einer Rührapparatur mit Stickstoffeinleitung und Wasserauskreiser unter Rühren auf 270 °C erhitzt. Nach 9 Stunden Reaktionszeit und einem Austrag von 444 g Wasser wurde eine Probe genommen und die OH-Zahl bestimmt. Die ermittelte OH-Zahl betrug 891 mg KOH/g. Dies entspricht einem mittleren Kondensationsgrad n von 9,7 Glycerineinheiten.

Herstellung von Polyglycerin (n = 5,0): 2000 g Glycerin und 6,0 g NaOH (50 Gew.-% in Wasser) wurden in einer Rührapparatur mit Stickstoffeinleitung und Wasserauskreiser unter Rühren auf 270 °C erhitzt. Nach 4 Stunden Reaktionszeit und einem Austrag von 226 g Wasser wurde eine Probe genommen und die OH-Zahl bestimmt. Die ermittelte OH-Zahl betrug 1009 mg KOH/g. Dies entspricht einem mittleren Kondensationsgrad n von 5,0 Glycerineinheiten.

Zur Bestimmung der OH-Zahl wird die in DIN 53240 beschriebene Methode verwendet.

Kondensation von Polyglycerin mit Mono- und Dicarbonsäure zum Copolymer: Das Polyglycerin wurde in einen Rührbehälter mit N₂-Durchleitung und Wasserauskreiser gegeben und mit Cocosfettsäure (C_{8/18}) und Phthalsäure versetzt. Anschließend wurde die Reaktionsmischung unter Rühren auf 220 °C erhitzt bis das Copolymer eine Säurezahl von < 1,00 mg KOH/g aufweist (drei bis neun Stunden)

Zur Bestimmung der Säurezahl wird die in DIN EN ISO 2114 beschriebene Methode verwendet.

In Tabelle 1 sind die eingesetzten Absolutmengen für die Monomere zur Herstellung der Copolymere 1 - 12 sowie die Gewichts-prozentuale Zusammensetzung der Copolymere 1 - 7 (für erfindungsgemäße Zusammensetzungen) und der Copolymere 8 - 12 (für Vergleichszusammensetzungen) angegeben.

Die in Tabelle 1 genannten Gewichts-prozentualen Zusammensetzungen der Copolymere 1 - 12 beziehen sich auf die Gesamtmenge der Monomere wie sie zur Herstellung der Copolymere eingesetzt wurden. Sie beziehen sich nicht auf die Endzusammensetzung der Copolymere, die durch Abspaltung von bei der Kondensation freiwerdendem Wasser davon abweicht.

**Tabelle 1 Zusammensetzung der Copolymere**

| Copolymer | Glycerin | n | Phthalsäure | Cocosfettsäure | Anteil Glycerin | Anteil Phthalsäure | Anteil Cocosfettsäure |
|---|---|---|---|---|---|---|---|
| | [g] | | [g] | [g] | [Gew.-%] | [Gew.-%] | [Gew.-%] |
| 1 | 460 | 5,0 | 1,7 | 408 | 52,9 | 0,2 | 46,9 |
| 2 | 460 | 5,0 | 17 | 408 | 52,0 | 1,9 | 46,1 |
| 3 | 218 | 9,7 | 40,4 | 98,8 | 61,0 | 11,3 | 27,7 |
| 4 | 460 | 5,0 | 166 | 204 | 55,4 | 20,0 | 24,6 |
| 5 | 218 | 9,7 | 83 | 98,8 | 54,5 | 20,8 | 24,7 |
| 6 | 460 | 5,0 | 166 | 408 | 44,5 | 16,1 | 39,5 |
| 7 | 460 | 5,0 | 166 | 712 | 34,4 | 12,4 | 53,2 |

| | | | | | | | |
|---|---|---|---|---|---|---|---|
| n: mittlerer Kondensationsgrad des Glycerins | | | | | | | |

### Herstellung erfindungsgemäß eingesetzter Copolymer-Zusammensetzungen

### Beispiel 1:

600 g von Copolymer 2 werden in 400 g Solvesso^{®} 200 ND unter Rühren eingetragen. Es entsteht eine klare, braune viskose Lösung.

### Beispiel 2:

600 g von Copolymer 2 werden in 400 g Rapsölmethylester unter Rühren eingetragen. Es entsteht eine klare, braune viskose Lösung.

### Beispiel 3:

700 g von Copolymer 2 werden in 300 g Solvesso^{®} 200 ND unter Rühren eingetragen. Es entsteht eine klare, braune viskose Lösung.

### Beispiel 4:

300 g von Copolymer 2 werden in 700 g Solvesso^{®} 200 ND unter Rühren eingetragen. Es entsteht eine klare, braune viskose Lösung.

### Beispiel 5:

600 g von Copolymer 5 werden in 400 g Rapsölmethylester unter Rühren eingetragen. Es entsteht eine klare, braune viskose Lösung.

### Beispiel 6:

600 g von Copolymer 5 werden in 400 g Solvesso^{®} 200 ND unter Rühren eingetragen. Es entsteht eine klare, braune viskose Lösung.

### Beispiel 7:

600 g von Copolymer 7 werden in 400 g Solvesso^{®} 200 ND unter Rühren eingetragen. Es entsteht eine klare, braune viskose Lösung.

### Beispiel 8:

600 g von Copolymer 7 werden in 400 g Solvesso^{®} 200 ND unter Rühren eingetragen. Es entsteht eine klare, braune viskose Lösung.

### Beispiele für Pestizidzusammensetzungen

Pestizid-Zusammensetzungen (Emulsionskonzentrate) werden aus den jeweils in den einzelnen Beispielen genannten Komponenten hergestellt.

### Pestizidzusammensetzung 1: lamba-Cyhalothrin-EC

50,0 g lamba-Cyhalothrin
30,0 g Phenylsulfonat CAL
30,0 g Emulsogen^{®} EL 400
100,0 g einer 60 Gew-%igen Lösung von Copolymer 5 in Rapsölmethylester
695,0 g Rapsölmethylester

### Pestizidzusammensetzung 2: Chlorpyrifos-EC

211,0 g Chlorpyrifos (97 Gew.-%)
50,0 g Phenylsulfonat CA
45,0 g Emulsogen^{®} EL 360
5,0 g Emulsogen^{®} 3510
80,0 g einer 60 Gew-%igen Lösung von Copolymer 2 in Solvesso^{®} 200 ND
609,0 g Solvesso^{®} 150

### Pestizidzusammensetzung 3: Tebuconazol-EC

206,0 g Tebuconazol (97 Gew.-%)
60,0 g Emulsogen^{®} EP 4901
40,0 g Emulsogen^{®} TS 200
50,0 g einer 60 Gew-%igen Lösung von Copolymer 7 in Solvesso^{®} 200 ND
150,0 g Synergen^{®} KN
250,0 g Acetophenon
250,0 g 2-Ethylhexanol

### Pestizidzusammensetzung 4: 2,4-D-Isooctylester-EC

632,0 g 2,4-D-Isooctylester (95 Gew.-%)
17,0 g Phenylsulfonat CA
24,0 g Emulsogen^{®} EL 360
50,0 g einer 60 Gew-%igen Lösung von Copolymer 2 in Solvesso^{®} 200 ND
277,0 g Solvesso^{®} 150

### Pestizidzusammensetzung 5: Acetochlor-EC

262,0 g Acetochlor (94 Gew.-%)
120,0 g einer 60 Gew-%igen Lösung von Copolymer 7 in Solvesso^{®} 200 ND
164,0 g Solvesso^{®} 150

### Pestizidzusammensetzung 6: Adjuvant-Zusammensetzung (Crop Oil Concentrate)

Ein Crop Oil Concentrate wird aus folgenden Komponenten hergestellt:
138,0 g Genapol^{®} C 030
15,0 g Phenylsulfonat CAL
200,0 g einer 60 gew-%igen Lösung von Copolymer 5 in Solvesso^{®} 200 ND
647,0 g Marcol^{®} 82

Zur Beurteilung des Einflusses der erfindungsgemäß eingesetzten Zusammensetzungen auf das Drift-Potential einer wässrigen Formulierung können die durchschnittlichen Tröpfchenvolumina des Sprühnebels sowie die Verteilung der Tröpfchengrößen sowohl unter Normalbedingungen als auch unter der Einwirkung von Scherkräften, ermittelt und beispielsweise den für reines Wasser ermittelten Werten gegenübergestellt werden.

### Anwendungsbeispiele

### Anwendungsbeispiel 1

Einfluss einer erfindungsgemäß eingesetzten Zusammensetzung von Z1 auf die Tröpfchengröße bei Spritzapplikation im Vergleich zu dem Standard Mowiol (Polyvinylalkohol)

Eine Zusammensetzung Z1 mit einer Komponente A), erhalten aus Glycerin,Phthalsäure und Cocosfettsäure und Rapsölmethylester als Komponente B), sowie Mowiol als Vergleichssubstanz, wurden auf Maisblätter im 2-3 Blattstadium aufgesprüht.

Die Spritzapplikation wurde mit einer Luftinjektordüse Al11002, Hektaraufwandmenge 120l/ha, bei einer Spritzgeschwindigkeit von ca. 3km/h durchgeführt. Ein fluoreszierender Farbstoff als Tracer wurde benutzt, um den Spritzbelag unter UV-Licht sichtbar zu machen.

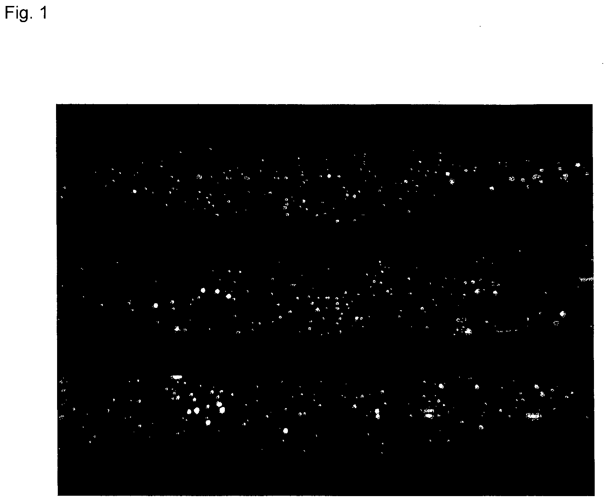

Die Figur 1 zeigt als Vergleich den Positiv-Standard für Tröpfchenhaftung auf einem schlecht benetzbaren Blatt (Mais, 2-3 Blattstadium) mit Mowiol 2688 (Handelsprodukt von Kuraray, Blockpolymer) bei 1g/l Spritzkonzentration. 99 % der Tröpfchen sind in der Klasse 10-68 Pixel².

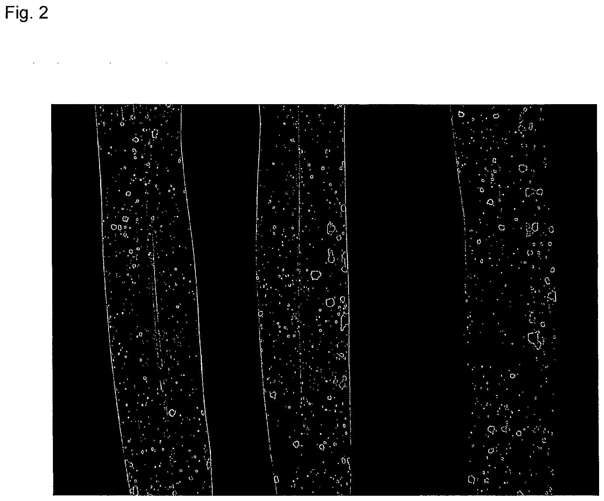

Figur 2 stellt Z1 mit 1 g/l dar. Auffällig ist hier, dass der Anteil kleiner Tropfen geringer ist als bei Mowiol (73 % der Tröpfchen in der Klasse 10 - 63 Pixel²).

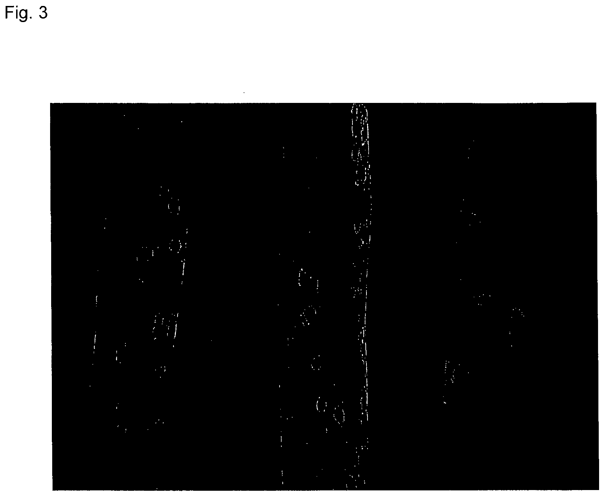

Figur 3 zeigt den Spritzbelag mit Z1, 2,5g/l Spritzkonzentration. Hier sind die Tropfen deutlich größer, der Anteil kleiner feiner - und somit driftanfälliger - Tropfen ist weiter reduziert (59 % in der Klasse 10 - 63 Pixel²).

### Anwendungsbeispiele 2 - 11

Als Materialien kamen die Zusammensetzung Z1 wie in Beispiel 1 sowie das darin enthaltene Copolymer A) allein (C1) zum Einsatz.

### Methodenbeschreibung

### Messung der Tropfengrößenverteilung

Ein Malvern Spraytec "real-time spray sizing system" wurde zur Bestimmung der Tropfengrößenverteilung verwendet. Dazu wurde das System (STP5321, Malvern Instruments GmbH, Heidelberg, Germany) in einer eigens konstruierten Spritzkabine montiert mit der Option, praxisübliche Spritzapplikationen bei frei einstellbarem Druck für diverse hydraulische Düsen und frei einstellbaren Abständen (Düse-Zieloberfläche) wählen zu können. Die Spritzkabine ist verdunkelbar und alle Störparameter können ausgeschaltet werden. Für die Messungen wurden die Standardflachstrahldüsen XR11002 (Teejet) und LU12002 (Lechler) mit feinem Tropfenspektrum sowie die Injektordüse ID12002 (Lechler) mit gröberen Tropfengrößen verwendet. Der eingestellte Druck wurde variiert und ein mittlerer Druck von 3 bar wurde für die nachfolgend berichteten Messungen konstant gehalten. Temperatur und relative Luftfeuchte variierten zwischen 21.5 und 29 °C bzw. 33 % und 56 %. Deshalb wurden stets Wasser als Bezug und die Zusammensetzung Z1 bei 5 g/l in Leitungswasser als interne Standards gemessen (meist vor und nach den Messungen der unbekannten Proben). Die Spraytec Messung wurde bei der Einstellung von 1 kHz vorgenommen, nachdem sich Messungen bei 2.5kHz oder höher wie auch andere Einflussgrößen wie zusätzliche Absaugung als vernachlässigbar erwiesen. Die Messung im Sprühnebel wurde konstant gehalten bei einer Position mit Abständen von genau 29.3 cm zur Düse und 0.4 cm vom Lot unter Düse. Die Messungen erfolgten innerhalb von 5 Sekunden und berichtet wird das Mittel von 6 Wiederholungen als Volumenanteil der Tropfen mit Durchmesser < 90 µm, < 105 µm und 150 µm (proz. Standardfehler 0.5 - 2.5 %). Als weitere Messparameter wurde der Anteil bei 210 µm bestimmt und in Bezug zum Wert von 105 µm gesetzt und die prozentuale Veränderung des feintropfigen Volumenanteils bis 105 µm im Vergleich zu Wasser errechnet.

### Anwendungsbeispiel 2 Tropfengrößenverteilung Flachstrahldüse (bei 3bar). Z1 Konzentrationsserie (im Vergleich zu Wasser)

| Sprühflüssigkeit | Konzentration [g/l] | %V < 90 µm rel. | %V < 105 µm rel. | %V < 150 µm rel. | Vol. Verhältnis 210/105 µm | Düse | % Reduktion Feintropfenanteil <105µm |
|---|---|---|---|---|---|---|---|
| Wasser | - | 25.1 | 34.6 | 59.6 | 2.3 | XR11002 | - |
| Z1 | 0.5 | 14.2 | 21.3 | 43.7 | 3.2 | XR11002 | 38 |
| Z1 | 1.0 | 13.0 | 19.6 | 40.9 | 3.3 | XR11002 | 43 |
| Z1 | 2.0 | 13.4 | 20.2 | 42.4 | 3.3 | XR11002 | 42 |
| Z1 | 3.0 | 12.8 | 19.2 | 40.7 | 3.4 | XR11002 | 45 |
| Z1 | 4.0 | 12.6 | 18.9 | 40.2 | 3.4 | XR11002 | 45 |
| Z1 | 5.0 | 12.4 | 18.4 | 38.8 | 3.4 | XR11002 | 47 |
| Z1 | 10.0 | 13.2 | 19.4 | 40.2 | 3.3 | XR11002 | 44 |

### Anwendungsbeispiel 3 Tropfengrößenverteilung Flachstrahldüse (bei 3bar). Z1 pur und Formulierungen (im Vergleich zu Wasser)

| Sprühflüssigkeit | Konzentration [g/l] | %V < 90 µm rel. | %V < 105 µm rel. | %V < 150 µm rel. | Vol. Verhältnis 210/105 µm | Düse | % Reduktion Feintropfenanteil < 105 µm |
|---|---|---|---|---|---|---|---|
| Wasser | - | 25.1 | 34.6 | 59.6 | 2.3 | XR11002 | - |
| Z1 | 5 | 12.4 | 18.4 | 38.8 | 3.4 | XR11002 | 47 |
| Z1 | 5 | 15.6 | 23.3 | 47.5 | 3.1 | XR11002 | 33 |
| EC | | | | | | | |
| XM6* | | | | | | | |
| Z1/Iso-butanol 80/20 | 5 | 14.8 | 22.2 | 45.3 | 3.2 | XR11002 | 36 |

| | | | | | | | |
|---|---|---|---|---|---|---|---|
| * Als Emulsionskonzentrat XM6 | | | | | | | |

Gute Reduktion des Feintropfenanteils mit Tröpfchendurchmesser unter 105 µm um 33 - 36 %, aber geringer als mit Z1 allein.
Das Verhältnis des Anteils der Tropfen bei 210 µm und 105 µm lag bei 3.1 - 3.4

### Anwendungsbeispiel 4 Tropfengrößenverteilung Flachstrahldüse (bei 3bar). C1 (Copolymer A von Z1 allein) im Vergleich zu Wasser und Z1

| Sprühflüssigkeit | Konzentration [g/l] | %V <90 µm rel. | %V < 105 µm rel. | %V < 150 µm rel. | Vol. Verhältnis 210/105 µm | Düse | % Reduktion Feintropfenanteil < 105 µm |
|---|---|---|---|---|---|---|---|
| Wasser | - | 26.7 | 36.8 | 62.8 | 2.3 | XR11002 | - |
| C1 | 1 | 15.7 | 23.0 | 45.5 | 3.0 | XR11002 | 37.5 |
| C1 | 2.5 | 15.6 | 23.1 | 46.0 | 3.0 | XR11002 | 37.2 |
| C1 | 5 | 18.3 | 26.7 | 51.2 | 2.8 | XR11002 | 27.4 |
| Z1 | 5 | 12.2 | 17.8 | 37.4 | 3.5 | XR11002 | 51.6 |

Das wasserlösliche Copolymer C1 allein führt bereits zu einer sehr guten Reduktion des Feintropfenanteils mit Tröpfchendurchmesser unter 105 µm um bis zu 37.5 % bei nur 1 g/l. Das ist nur 6 % weniger als der Wert für Z1 bei 1 g/l. (43 %). Bei höheren Einsatzkonzentrationen von 5 g/l führte Z1 mit der Ölkomponente dagegen zu einer deutlich stärkeren Reduktion des Feintropfenanteils.

### Anwendungsbeispiel 5 Tropfengrößenverteilung Flachstrahldüse - Effekte bei unterschiedlichem Druck von 3 und 5 bar. Z1 allein im Vergleich zu Wasser

| Sprühflüssigkeit | Konzentration [g/l] | %V <90 µm rel. | %V <105 µm rel. | %V < 150 µm rel. | Vol. Verhältnis 210/105 µm | Düse | % Reduktion Feintropfenanteil < 105 µm |
|---|---|---|---|---|---|---|---|
| Wasser | - | 26.7 | 36.9 | 63.1 | 2.3 | XR11002 3 bar | - |
| Z1 | 5 g/l | 12.2 | 17.8 | 37.4 | 3.5 | XR 11002 3 bar | 51.8 |
| Wasser | - | 34.4 | 45.0 | 69.7 | 1.9 | XR11002 5 bar | - |
| Z1 | 5 g/l | 18.4 | 25.8 | 48.4 | 2.8 | XR11002 5 bar | 42.7 |

Gute Reduktion des Feintropfenanteils durch Z1 mit Tröpfchendurchmesser unter 105 µm auch bei hohem Druck. Auch bei 5 bar Reduktion um 43 % im Vergleich zu Wasser.

### Anwendungsbeispiel 6 Tropfengrößenverteilung mit Z1 bei anderer Flachstrahl- und Injektordüse im Vergleich zu Wasser (3 bar)

| Sprühflüssigkeit | Konzentration [g/l] | %V < 90 µm rel. | %V < 105 µm rel. | %V < 150 µm rel. | Vol. Verhältnis 210/105 µm | Düse | % Reduktion Feintropfenanteil <105 µm |
|---|---|---|---|---|---|---|---|
| Wasser | - | 24.3 | 33.6 | 58.2 | 2.3 | LU12002 | - |
| | | | | | | 3 bar | |
| Z1 | 5 g/l | 8.0 | 12.3 | 28.6 | 4.2 | LU12002 3 bar | 63.4 |
| Wasser | - | 1.9 | 3.0 | 7.9 | 5.3 | ID12002 3 bar | - |
| Z1 | 5 g/l | 1.3 | 2.0 | 4.7 | 5.1 | ID12002 3 bar | 33.3 |

Gute Reduktion des Feintropfenanteils durch Z1 mit Tröpfchendurchmesser unter 105 µm auch bei anderen Düsen, einschließlich einer sehr grobtropfigen Injektordüse. Hervorzuheben ist, dass bei der Injektordüse mit per se größeren Tropfen keine weitere Verschiebung zu größeren Tröpfchendurchmesser erfolgte, sondern sogar eine erwünschte Verringerung des Anteils großer Tropfen.

### Anwendungsbeispiel 7 Robuste Verringerung der feinen Tropfen durch Z1 bei Kombination mit einem Herbizid, welches den Feintropfenanteil erhöht (Injektordüse, 3 bar)

| Sprühflüssigkeit | Konzentration [g/l] | %V < 90 µm rel. | %V < 105 µm rel. | %V < 150 µm rel. | Vol. Verhältnis 210/105 µm | Düse | % Reduktion Feintropfenanteil < 105 µm |
|---|---|---|---|---|---|---|---|
| Wasser | - | 1.9 | 3.0 | 7.9 | 5.3 | ID12002 3 bar | |
| Round Up Transsorb | 15 | 5.7 | 8.9 | 20.1 | 4.0 | ID12002 3 bar | Erhöhung |
| Z1 | 5 | 1.3 | 2.0 | 4.7 | 5.1 | ID12002 3 bar | 33.3 (gegen Wasser) |
| RoundUp Transsorb Z1 | 15 2,5 | 1.5 | 2.3 | 5.5 | 5.0 | ID12002 3 bar | 74 (gegen. RoundUp Transsorb) |
| RoundUp Transsorb Z1 | 15 5 | 1.2 | 1.9 | 4.5 | 5.2 | ID12002 3 bar | 78 (gegen RoundUp Transsorb) |

Hervorragende Reduktion des Feintropfenanteils durch Z1 in Kombination mit RoundUp Transsorb, einem Beispiel für eine Herbizidformulierung mit dem Wirkstoff Glyphosate. Diese hat den Feintropfenanteil bezogen auf Wasser um 200 % erhöht.

Z1 senkt dagegen den Feintropfenanteil konzentrationsabhängig bei wirtschaftlichen Einsatzkonzentrationen um über 74 % ab.

### Anwendungsbeispiel 8 Verringerung der feinen Tropfen durch Mischungen von Z1 mit methyliertem Saatöl (MSO) und ethyliertem Saatöl (ESO) (Injektordüse, 3 bar)

| Sprühflüssigkeit | Konzentration [g/l] | %V < 90 µm rel. | %V < 105 µm rel. | %V < 150 µm rel. | Vol. Verhältnis 210/105 µm | Düse | % Reduktion Feintropfenanteil < 105 µm |
|---|---|---|---|---|---|---|---|
| Wasser | - | 2.5 | 3.8 | 8.2 | 3.7 | ID12002 3 bar | - |
| Z1/MSO 75/25 | 5 | 1.5 | 2.1 | 3.9 | 3.3 | ID12002 3 bar | 44.7 |
| Z1/MSO | 5 | 1.3 | 1.8 | 3.5 | 3.9 | ID12002 | 52.6 |
| 50/50 | | | | | | 3 bar | |
| Z1/MSO 30/70 | 5 | 1.5 | 2.1 | 3.6 | 2.8 | ID12002 3 bar | 44.7 |
| Z1/ESO 75/25 | 5 | 1.6 | 2.2 | 4.1 | 3.4 | ID12002 3 bar | 42.1 |
| Z1/ESO 50/50 | 5 | 1.4 | 2.0 | 3.9 | 3.8 | ID12002 3 bar | 47.4 |
| Z1/ESO 30/70 | 5 | 1.5 | 2.1 | 3.7 | 2.9 | ID12002 3 bar | 44.7 |

Sehr gute und nur wenig konzentrationsabhängige Reduktion des Feintropfenanteils mit Tröpfchendurchmesser unter 105 µm um 43 - 53 %. Eine 1/1 Mischung von Z1 und MSO bzw. Z1 und ESO zeigte jeweils das beste Ergebnis.

### Anwendungsbeispiel 9 Verringerung der feinen Tropfen durch Mischungen von Z1 mit Weißöl oder Fettsäuren (Injektordüse, 3 bar)

| Sprühflüssigkeit | Konzentration [g/l] | %V < 90 µm rel. | %V < 105 µm rel. | %V < 150 µm rel. | Vol. Verhältnis 210/105 µm | Düse | % Reduktion Feintropfenanteil < 105 µm |
|---|---|---|---|---|---|---|---|
| Wasser | - | 2.5 | 3.8 | 8.2 | 3.7 | ID12002 3 bar | - |
| Z1 | 5 | 1.5 | 2.1 | 3.6 | 3.2 | ID12002 3 bar | 44.7 |
| Z1/MSO 75/25 | 5 | 1.5 | 2.1 | 3.9 | 3.3 | ID12002 3 bar | 44.7 |
| Z1/ | 5 | 1.3 | 1.9 | 3.3 | 3.3 | ID12002 | 50 |
| Bayol 85 (mit 10% ELO*) 1/1 | | | | | | 3 bar | |
| Z1/ Bayol 85 (mit 20 % ELO*) 1/1 | 5 | 1.6 | 2.3 | 4.0 | 3.3 | ID12002 3 bar | 39.5 |
| Z1/ Edenor TI 05** (70/30) | 5 | 1.5 | 2.2 | 3.9 | 3.5 | ID12002 3 bar | 42.1 |
| Z1/ Fettsäure C8/10 (70/30) | 5 | 1.7 | 2.4 | 4.5 | 3.8 | ID12002 3 bar | 36.8 |
| Z1/ Rizinusöl Fettsäuregemisch (70/30) | 5 | 1.6 | 2.3 | 4.1 | 3.5 | ID12002 3 bar | 39.5 |
| Z1/ Olivenöl Fettsäuregemisch (70/30) | 5 | 1.4 | 1.9 | 3.4 | 3.5 | ID12002 3 bar | 50 |

| | | | | | | | |
|---|---|---|---|---|---|---|---|
| * Zugabe von 10 oder 20 % Emulsogen ELO zu dem Bayol 85 (Weißöl) Anteil zur besseren Emulsion, Verhältnis Z1/Bayol 85 1/1 ** Edenor TI05 (Talgfett Ölsäure) | | | | | | | |

In allen Fällen sehr gute und im Bereich des Z1 bzw. Z1/MSO (75/25) liegende Reduktion des Feintropfenanteils mit Tröpfchendurchmesser unter 105 µm um 37 - 50 %. Z1 allein liegt genau zwischen den Werten.

### Anwendungsbeispiel 10 Verringerung des Feintropfenanteils von Spritzbrühen enthaltend Ammoniumsulfat (AMS) mit Z1 (Injektordüse, 3 bar)

| Sprühflüssigkeit | Konzentration [g/l] | %V < 90 µm rel. | %V < 105 µm rel. | %V < 150 µm rel. | Vol. Verhältnis 210/105 µm | Düse | % Reduktion Feintropfenanteil < 105 µm |
|---|---|---|---|---|---|---|---|
| Wasser | - | 2.0 | 3.0 | 6.1 | 3.6 | ID12002 3 bar | |
| Z1 | 5 | 1.5 | 2.2 | 3.9 | 3.2 | ID12002 3 bar | 26.7 |
| AMS | 2.5 | 2.6 | 4.0 | 8.4 | 3.7 | ID12002 3 bar | Erhöhung gegen Wasser 33.3 |
| AMS | 5 | 3.0 | 4.6 | 9.9 | 3.7 | ID12002 3 bar | Erhöhung gegen Wasser 53.3 |
| AMS | 10 | 3.6 | 5.6 | 12.3 | 3.7 | ID12002 3 bar | Erhöhung gegen Wasser 86.7 |
| AMS | 25 | 5.4 | 7.9 | 15.5 | 3.0 | | Erhöhung |
| | | | | | | | gegen Wasser 163.3 |
| Z1 + AMS (in Sprühqualität) | 5 | 1.5 | 2.1 | 3.7 | 3.3 | ID12002 3 bar | Reduktion gegen. AMS 47.5 |
| | 2.5 | | | | | | |
| Z1 + AMS (in Sprühqualität) | 5 | 1.6 | 2.3 | 4.1 | 3.4 | ID12002 3 bar | Reduktion gegen AMS 50 |
| | 5 | | | | | | |
| Z1 + AMS (in Sprühqualität) | 5 | 1.8 | 2.4 | 4.4 | 3.7 | ID12002 3 bar | Reduktion gegen AMS 57.1 |
| | 10 | | | | | | |
| Z1 + AMS (in Sprühqualität) | 5 | 1.8 | 2.5 | 4.8 | 3.9 | ID12002 3 bar | Reduktion gegen AMS 68.4 |
| | 25 | | | | | | |

Es zeigt sich eine exzellente Reduktion des Feintropfenanteils mit Tröpfchendurchmesser unter 105µm um 48-68% bei allen AMS Konzentrationen schon mit 5 g/l Z1. AMS alleine hat dagegen den Feintropfenanteil stark erhöht.

### Anwendungsbeispiel 11 Verringerung des Feintropfenanteils von Spritzbrühen mit Z1 in Anwesenheit eines den Feintropfenanteil erhöhenden Talgaminethoxylat-Tensides (Injektordüse, 3 bar)

| Sprühflüssigkeit | Konzentration [g/l] | %V < 90 µm rel. | %V < 105 µm rel. | %V < 150 µm rel. | Vol. Verhältnis 210/105 µm | Düse | % Reduktion Feintropfenanteil < 105 µm |
|---|---|---|---|---|---|---|---|
| Wasser | - | 1.9 | 3.0 | 7.9 | 5.3 | XR11002 3 bar | |
| Z1 | 5 | 1.3 | 2.0 | 4.7 | 5.1 | XR11002 3 bar | 33.3 |
| Z1 + Talgaminethoxylat * | 5 | 1.3 | 2.0 | 4.9 | 5.6 | XR11002 3 bar | 33.3 |
| | 2 | | | | | | |

| | | | | | | | |
|---|---|---|---|---|---|---|---|
| * Genamin T200 (kommerzielles Talgaminethoxylat) | | | | | | | |

Exzellente Reduktion des Feintropfenanteils mit Tröpfchendurchmesser unter 105 µm um 33.3% auch in Anwesenheit eines nichtionischen Tensides, welches den Feintropfenanteil in der Spritzbrühe um 10 - 15 % erhöht.

## Patentansprüche

1. Verwendung von einem oder mehreren Copolymeren A), wobei die Copolymere eine oder mehrere Struktureinheiten, hervorgegangen aus
a) 19,9 bis 75,9 Gew.-% Glycerin
b) 0,1 bis 30 Gew.-% mindestens einer Dicarbonsäure, wobei es sich bei der mindestens einen Dicarbonsäure b) um Oxalsäure; eine Dicarbonsäure gemäß Formel (II)
HOOC-R²-COOH (II)
und/oder eine Dicarbonsäure gemäß Formel (III) 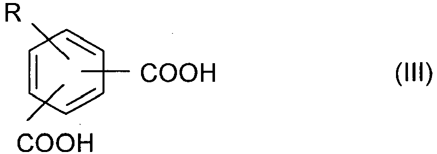 handelt, wobei R² eine (C₁-C₄₀)-Alkylen-Brücke oder eine (C₂-C₂₀)-Alkenylen-Brücke darstellt und R H, (C₁-C₂₀)-Alkyl, (C₂-C₂₀)-Alkenyl, Phenyl, Benzyl, Halogen, -NO₂, (C₁-C₆)-Alkoxy, -CHO oder -CO((C₁-C₆)-Alkyl) darstellt, und
c) 24 bis 80 Gew.-% mindestens einer Monocarbonsäure gemäß Formel (I)
R¹-COOH (I)
wobei R¹ (C₅-C₂₉)-Alkyl; (C₇-C₂₉)-Alkenyl; Phenyl oder Naphthyl darstellt, enthalten,
zur Verminderung des Drifts bei der Applikation von Pestizidzubereitungen.

2. Verwendung gemäß Anspruch 1 in Form von Zusammensetzungen, enthaltend
A) ein oder mehrere Copolymere, wobei die Copolymere eine oder mehrere Struktureinheiten hervorgegangen aus
a) 19,9 bis 75,9 Gew.-% Glycerin
b) 0,1 bis 30 Gew.-% mindestens einer Dicarbonsäure, wobei es sich bei der mindestens einen Dicarbonsäure b) um Oxalsäure; eine Dicarbonsäure gemäß Formel (II)
HOOC-R²-COOH (II)
und/oder eine Dicarbonsäure gemäß Formel (III) 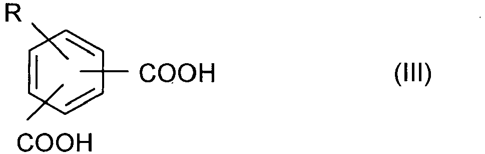 handelt, wobei R² eine (C₁-C₄₀)-Alkylen-Brücke oder eine (C₂-C₂₀)-Alkenylen-Brücke darstellt und R H, (C₁-C₂₀)-Alkyl, (C₂-C₂₀)-Alkenyl, Phenyl, Benzyl, Halogen, -NO₂ (C₁-C₆)-Alkoxy, -CHO oder -CO((C₁-C₆)-Alkyl) darstellt, und
c) 24 bis 80 Gew.-% mindestens einer Monocarbonsäure gemäß Formel (I)
R¹-COOH (I)
wobei R¹ (C₅-C₂₉)-Alkyl; (C₇-C₂₉)-Alkenyl; Phenyl oder Naphthyl darstellt, enthalten und
B) ein wasserunmischbares Flüssigmedium, enthaltend einen oder mehrere Vertreter aus der Gruppe bestehend aus Estern von Mono- und Dicarbonsäuren, deren Säure- und/oder Alkoholkomponente mindestens 4 C-Atome aufweist, pflanzlichen Ölen, Mineralölen und aromatischen Kohlenwasserstoffen, zur Verminderung des Drifts bei der Applikation von Pestizidzubereitungen.

3. Verwendung nach Anspruch 2, wobei die Zusammensetzungen entweder kein Wasser oder Wasser in einer Menge kleiner oder gleich 1,0 Gew.-% jeweils bezogen auf das Gesamtgewicht der jeweiligen Zusammensetzung, enthalten

4. Verwendung gemäß Anspruch 2 oder 3, wobei das wasserunmischbare Flüssigmedium C₆-C₁₆-Aromatengemische oder Methylester von Fettsäuren pflanzlichen oder tierischen Ursprungs enthält.

5. Verwendung gemäß einem oder mehreren der Ansprüche 2 bis 4, wobei in der Zusammensetzung der Anteil des einen oder der mehreren Copolymere der Komponente A) 1 bis 90 Gew.-%, bevorzugt 10 bis 80 Gew.-% und besonders bevorzugt 20 bis 70 Gew.-% beträgt und der Anteil der Komponente B) 10 bis 99 Gew.-%, bevorzugt 20 bis 90 Gew.-% und besonders bevorzugt 30 bis 80 Gew.-% beträgt.

6. Verwendung gemäß einem oder mehreren der Ansprüche 1 bis 4, wobei die Zusammensetzung oder die Pestizidzubereitung zusätzlich ein oder mehrere Pestizide enthält.

7. Verwendung gemäß Anspruch 6, **dadurch gekennzeichnet, dass** der Anteil des einen oder der mehreren Copolymere A) 0,1 bis 40 Gew.-%, bevorzugt 0,5 bis 30 Gew.-% und besonders bevorzugt 1 bis 20 Gew.-% beträgt und der Anteil des einen oder der mehreren Pestizide 0,1 bis 75 Gew.-%, bevorzugt 5 bis 50 Gew.-% und besonders bevorzugt 10 bis 40 Gew.-% beträgt.

8. Verwendung gemäß einem oder mehreren der Ansprüche 2 bis 4, wobei die Zusammensetzung zusätzlich ein oder mehrere Pestizide enthält, der Anteil des einen oder der mehreren Copolymere A) 0,1 bis 40 Gew.-%, bevorzugt 0,5 bis 30 Gew.-% und besonders bevorzugt 1 bis 20 Gew.-% beträgt, der Anteil der Komponente B) 1 bis 99,8 Gew.-%, bevorzugt 5 bis 80 Gew.-% und besonders bevorzugt 10 bis 70 Gew.-% beträgt und der Anteil des einen oder der mehreren Pestizide 0,1 bis 75 Gew.-%, bevorzugt 5 bis 50 Gew.-% und besonders bevorzugt 10 bis 40 Gew.-% beträgt.

9. Verwendung gemäß einem oder mehreren der Ansprüche 1 bis 4, wobei die Zusammensetzung zusätzlich eine oder mehrere oberflächenaktive Substanzen enthält.

10. Verwendung gemäß Anspruch 9, wobei der Anteil des einen oder der mehreren Copolymere A) 1 bis 90 Gew.-%, bevorzugt 2 bis 60 Gew-% und besonders bevorzugt 5 bis 50 Gew.-% beträgt und der Anteil der einen oder der mehreren oberflächenaktiven Substanzen 0,1 bis 50 Gew.-%, bevorzugt 1 bis 30 Gew-% und besonders bevorzugt 2 bis 20 Gew.-% beträgt.

11. Verwendung nach einem oder mehreren der Ansprüche 2 bis 4, wobei die Zusammensetzung zusätzlich eine oder mehrere oberflächenaktive Substanzen enthält, der Anteil des einen oder der mehreren Copolymere A) 1 bis 90 Gew.-%, bevorzugt 2 bis 60 Gew-% und besonders bevorzugt 5 bis 50 Gew.-% beträgt, der Anteil des einen oder der mehreren nicht mit Wasser mischbaren Lösemittel der Komponente B) 1 bis 98,9 Gew.-%, bevorzugt 20 bis 80 Gew.-% und besonders bevorzugt 48 bis 90 Gew.-% beträgt und der Anteil der einen oder der mehreren oberflächenaktiven Substanzen 0,1 bis 50 Gew.-%, bevorzugt 1 bis 30 Gew-% und besonders bevorzugt 2 bis 20 Gew.-% beträgt.

12. Verwendung gemäß einem oder mehreren der Ansprüche 1 bis 4, wobei die Zusammensetzung zusätzlich ein oder mehrere Pestizide und eine oder mehrere oberflächenaktive Substanzen enthält.

13. Verwendung nach Anspruch 12, wobei der Anteil des einen oder der mehreren Copolymere A) 0,1 bis 40 Gew.-%, bevorzugt 0,5 bis 30 Gew.-% und besonders bevorzugt 1 bis 20 Gew.-% beträgt, der Anteil des einen oder der mehreren Pestizide 0,1 bis 75 Gew.-%, bevorzugt 5 bis 50 Gew.-% und besonders bevorzugt 10 bis 40 Gew.-% beträgt und der Anteil der einen oder der mehreren oberflächenaktiven Substanzen 0,1 bis 30 Gew.-%, bevorzugt 0,5 bis 25 Gew-% und besonders bevorzugt 1 bis 20 Gew.-% beträgt.

14. Verwendung nach einem oder mehreren der Ansprüche 2 bis 4, wobei die Zusammensetzung zusätzlich ein oder mehrere Pestizide und eine oder mehrere oberflächenaktive Substanzen enthält, der Anteil des einen oder der mehreren Copolymere A) 0,1 bis 40 Gew.-%, bevorzugt 0,5 bis 30 Gew.-% und besonders bevorzugt 1 bis 20 Gew.-% beträgt, der Anteil der Komponente B) 1 bis 99,7 Gew.-%, bevorzugt 5 bis 80 Gew.-% und besonders bevorzugt 10 bis 70 Gew.-% beträgt, der Anteil des einen oder der mehreren Pestizide 0,1 bis 75 Gew.-%, bevorzugt 5 bis 50 Gew.-% und besonders bevorzugt 10 bis 40 Gew.-% beträgt und der Anteil der einen oder der mehreren oberflächenaktiven Substanzen 0,1 bis 30 Gew.-%, bevorzugt 0,5 bis 25 Gew-% und besonders bevorzugt 1 bis 20 Gew.-% beträgt.

15. Verwendung gemäß einem oder mehreren der Ansprüche 1 bis 14, **dadurch gekennzeichnet, dass** es sich bei der mindestens einen Dicarbonsäure b) um Phthalsäure und bei der mindestens einen Monocarbonsäure c) um Cocosfettsäure handelt.

16. Verfahren zur Verminderung des Drifts bei der Applikation von Pestizidzubereitungen, wobei eine Spritzbrühe auf die zu behandelnden Pflanzen oder deren Ort aufgesprüht wird, wobei die pestizidhaltige Spritzbrühe ein oder mehrere Copolymere A) oder eine Zusammensetzung nach einem der Ansprüche 1 bis 15 enthält.

## Claims

1. The use of one or more copolymers A), wherein the copolymers contain one or more structural units deriving from
a) 19.9% to 75.9% by weight of glycerol
b) 0.1% to 30% by weight of at least one dicarboxylic acid, wherein the at least one dicarboxylic acid b) is oxalic acid; a dicarboxylic acid of the formula (II)
HOOC-R²-COOH (II)
and/or a dicarboxylic acid of the formula (III) 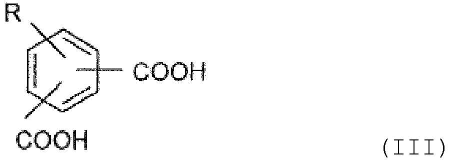 where R² is a (C₁-C₄₀) -alkylene bridge or a (C₂-C₂₀)-alkenylene bridge and R is H, (C₁-C₂₀)-alkyl, (C₂-C₂₀)-alkenyl, phenyl, benzyl, halogen, -NO₂, (C₁-C₆)-alkoxy, -CHO or -CO((C₁-C₆)-alkyl), and
c) 24% to 80% by weight of at least one monocarboxylic acid of the formula (I)
R¹-COOH (I)
where R¹ is (C₅-C₂₉) -alkyl; (C₇-C₂₉)-alkenyl; phenyl or naphthyl,
for reducing drift in the application of pesticide formulations.

2. The use as claimed in claim 1 in the form of compositions comprising
A) one or more copolymers, where the copolymers contain one or more structural units deriving from
a) 19.9% to 75.9% by weight of glycerol
b) 0.1% to 30% by weight of at least one dicarboxylic acid, wherein the at least one dicarboxylic acid b) is oxalic acid; a dicarboxylic acid of the formula (II)
HOOC-R²-COOH (II)
and/or a dicarboxylic acid of the formula (III) 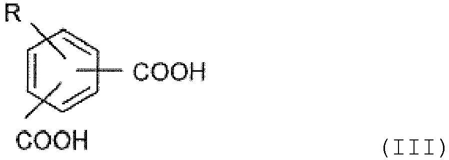 where R² is a (C₁-C₄₀)-alkylene bridge or a (C₂-C₂₀)- alkenylene bridge and R is H, (C₁-C₂₀) -alkyl, (C₂-C₂₀) -alkenyl, phenyl, benzyl, halogen, -NO₂, (C₁-C₆)-alkoxy, -CHO or -CO((C₁-C₆)-alkyl), and
c) 24% to 80% by weight of at least one monocarboxylic acid of the formula (I)
R¹-COOH (I)
where R¹ is (C₅-C₂₉) -alkyl; (C₇-C₂₉)-alkenyl; phenyl or naphthyl and
B) a water-immiscible liquid medium comprising one or more representatives from the group consisting of esters of mono- and dicarboxylic acids, the acid and/or alcohol component of the latter having at least 4 carbon atoms, vegetable oils, mineral oils and aromatic hydrocarbons,
for reducing drift in the application of pesticide formulations.

3. The use as claimed in claim 2, wherein the compositions either contain no water or contain water in an amount less than or equal to 1.0% by weight, based in each case on the total weight of the respective composition.

4. The use as claimed in claim 2 or 3, wherein the water-immiscible liquid medium comprises C₆-C₁₆ aromatics mixtures or methyl esters of fatty acids of vegetable or animal origin.

5. The use as claimed in one or more of claims 2 to 4, wherein the proportion of the one or more copolymers of component A) in the composition is 1% to 90% by weight, preferably 10% to 80% by weight and more preferably 20% to 70% by weight, and the proportion of component B) is 10% to 99% by weight, preferably 20% to 90% by weight and more preferably 30% to 80% by weight.

6. The use as claimed in one or more of claims 1 to 4, wherein the composition or the pesticide formulation additionally comprises one or more pesticides.

7. The use as claimed in claim 6, wherein the proportion of the one or more copolymers A) is 0.1% to 40% by weight, preferably 0.5% to 30% by weight and more preferably 1% to 20% by weight, and the proportion of the one or more pesticides is 0.1% to 75% by weight, preferably 5% to 50% by weight and more preferably 10% to 40% by weight.

8. The use as claimed in one or more of claims 2 to 4, wherein the composition additionally comprises one or more pesticides, the proportion of the one or more copolymers A) is 0.1% to 40% by weight, preferably 0.5% to 30% by weight and more preferably 1% to 20% by weight, the proportion of component B) is 1% to 99.8% by weight, preferably 5% to 80% by weight and more preferably 10% to 70% by weight, and the proportion of the one or more pesticides is 0.1% to 75% by weight, preferably 5% to 50% by weight and more preferably 10% to 40% by weight.

9. The use as claimed in one or more of claims 1 to 4, wherein the composition additionally comprises one or more surface-active substances.

10. The use as claimed in claim 9, wherein the proportion of the one or more copolymers A) is 1% to 90% by weight, preferably 2% to 60% by weight and more preferably 5% to 50% by weight, and the proportion of the one or more surface-active substances is 0.1% to 50% by weight, preferably 1% to 30% by weight and more preferably 2% to 20% by weight.

11. The use as claimed in one or more of claims 2 to 4, wherein the composition additionally comprises one or more surface-active substances, the proportion of the one or more copolymers A) is 1% to 90% by weight, preferably 2% to 60% by weight and more preferably 5% to 50% by weight, the proportion of the one or more water-immiscible solvents in component B) is 1% to 98.9% by weight, preferably 20% to 80% by weight and more preferably 48% to 90% by weight, and the proportion of the one or more surface-active substances is 0.1% to 50% by weight, preferably 1% to 30% by weight and more preferably 2% to 20% by weight.

12. The use as claimed in one or more of claims 1 to 4, wherein the composition additionally comprises one or more pesticides and one or more surface-active substances.

13. The use as claimed in claim 12, wherein the proportion of the one or more copolymers A) is 0.1% to 40% by weight, preferably 0.5% to 30% by weight and more preferably 1% to 20% by weight, the proportion of the one or more pesticides is 0.1% to 75% by weight, preferably 5% to 50% by weight and more preferably 10% to 40% by weight, and the proportion of the one or more surface-active substances is 0.1% to 30% by weight, preferably 0.5% to 25% by weight and more preferably 1% to 20% by weight.

14. The use as claimed in one or more of claims 2 to 4, wherein the composition additionally comprises one or more pesticides and one or more surface-active substances, the proportion of the one or more copolymers A) is 0.1% to 40% by weight, preferably 0.5% to 30% by weight and more preferably 1% to 20% by weight, the proportion of component B) is 1% to 99.7% by weight, preferably 5% to 80% by weight and more preferably 10% to 70% by weight, the proportion of the one or more pesticides is 0.1% to 75% by weight, preferably 5% to 50% by weight and more preferably 10% to 40% by weight, and the proportion of the one or more surface-active substances is 0.1% to 30% by weight, preferably 0.5% to 25% by weight and more preferably 1% to 20% by weight.

15. The use as claimed in one or more of claims 1 to 14, wherein the at least one dicarboxylic acid b) is phthalic acid and the at least one monocarboxylic acid c) is coconut fatty acid.

16. A method of reducing drift in the application of pesticide formulations, wherein a spray liquor is sprayed onto the plants to be treated or the site thereof, wherein the pesticide-containing spray liquor comprises one or more copolymers A) or a composition as claimed in any of claims 1 to 15.

## Revendications

1. Utilisation d'un ou de plusieurs copolymères A), les copolymères contenant une ou plusieurs unités structurales, dérivées de :
a) 19,9 à 75,9 % en poids de glycérine,
b) 0,1 à 30 % en poids d'au moins un acide dicarboxylique, ledit au moins un acide dicarboxylique b) étant l'acide oxalique, un acide dicarboxylique de formule (II)
HOOC-R²-COOH (II)
et/ou un acide dicarboxylique de formule (III) 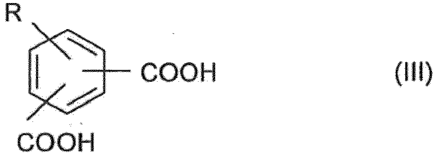 dans lesquelles R² représente un pont alkylène en (C₁-C₄₀) ou un pont alcénylène en (C₂-C₂₀), et R représente H, alkyle en (C₁-C₂₀), alcényle en (C₂-C₂₀), phényle, benzyle, halogène, -NO₂, alcoxy en (C₁-C₆), -CHO ou -CO(alkyle en (C₁-C₆), et
c) 24 à 80 % en poids d'au moins un acide monocarboxylique de formule (I)
R¹-COOH (I)
dans laquelle R¹ représente alkyle en (C₅-C₂₉), alcényle en (C₇-C₂₉), phényle ou naphtyle,
pour réduire la dérive lors de l'application de préparations pesticides.

2. Utilisation selon la revendication 1 sous la forme de compositions contenant
A) un ou plusieurs copolymères, les copolymères contenant une ou plusieurs unités structurales dérivées de
a) 19,9 à 75,9 % en poids de glycérine,
b) 0,1 à 30 % en poids d'au moins un acide dicarboxylique, ledit au moins un acide dicarboxylique b) étant l'acide oxalique, un acide dicarboxylique de formule (II)
HOOC-R²-COOH (II)
et/ou un acide dicarboxylique de formule (III) 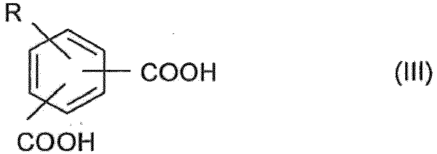 dans lesquelles R² représente un pont alkylène en (C₁-C₄₀) ou un pont alcénylène en (C₂-C₂₀), et R représente H, alkyle en (C₁-C₂₀), alcényle en (C₂-C₂₀), phényle, benzyle, halogène, -NO₂, alcoxy en (C₁-C₆), -CHO ou -CO(alkyle en (C₁-C₆), et
c) 24 à 80 % en poids d'au moins un acide monocarboxylique de formule (I)
R¹-COOH (I)
dans laquelle R¹ représente alkyle en (C₅-C₂₉), alcényle en (C₇-C₂₉), phényle ou naphtyle, et
B) un milieu liquide non miscible avec l'eau, contenant un ou plusieurs éléments du groupe constitué par les esters d'acides mono- et dicarboxyliques dont le composant acide et/ou alcool comprend au moins 4 atomes C, les huiles végétales, les huiles minérales et les hydrocarbures aromatiques,
pour réduire la dérive lors de l'application de préparations pesticides.

3. Utilisation selon la revendication 2, dans laquelle les compositions soit ne contiennent pas d'eau, soit contiennent de l'eau en une quantité inférieure ou égale à 1,0 % en poids, à chaque fois par rapport au poids total de la composition en question.

4. Utilisation selon la revendication 2 ou 3, dans laquelle le milieu liquide non miscible avec l'eau contient des mélanges de composés aromatiques en C₆-C₁₆ ou des esters méthyliques d'acides gras d'origine végétale ou animale.

5. Utilisation selon une ou plusieurs des revendications 2 à 4, dans laquelle, dans la composition, la proportion du ou des copolymères du composant A) est de 1 à 90 % en poids, de préférence de 10 à 80 % en poids et de manière particulièrement préférée de 20 à 70 % en poids, et la proportion du composant B) est de 10 à 99 % en poids, de préférence de 20 à 90 % en poids et de manière particulièrement préférée de 30 à 80 % en poids.

6. Utilisation selon une ou plusieurs des revendications 1 à 4, dans laquelle la composition ou la préparation pesticide contient en outre un ou plusieurs pesticides.

7. Utilisation selon la revendication 6, **caractérisée en ce que** la proportion du ou des copolymères A) est de 0,1 à 40 % en poids, de préférence de 0,5 à 30 % en poids et de manière particulièrement préférée de 1 à 20 % en poids, et la proportion du ou des pesticides est de 0,1 à 75 % en poids, de préférence de 5 à 50 % en poids et de manière particulièrement préférée de 10 à 40 % en poids.

8. Utilisation selon une ou plusieurs des revendications 2 à 4, dans laquelle la composition contient en outre un ou plusieurs pesticides, la proportion du ou des copolymères A) étant de 0,1 à 40 % en poids, de préférence de 0,5 à 30 % en poids, et de manière particulièrement préférée de 1 à 20 % en poids, la proportion du composant B) étant de 1 à 99,8 % en poids, de préférence de 5 à 80 % en poids et de manière particulièrement préférée de 10 à 70 % en poids, et la proportion du ou des pesticides étant de 0,1 à 75 % en poids, de préférence de 5 à 50 % en poids, et de manière particulièrement préférée de 10 à 40 % en poids.

9. Utilisation selon une ou plusieurs des revendications 1 à 4, dans laquelle la composition contient en outre une ou plusieurs substances tensioactives.

10. Utilisation selon la revendication 9, dans laquelle la proportion du ou des copolymères A) est de 1 à 90 % en poids, de préférence de 2 à 60 % en poids et de manière particulièrement préférée de 5 à 50 % en poids, et la proportion de la ou des substances tensioactives est de 0,1 à 50 % en poids, de préférence de 1 à 30 % en poids et de manière particulièrement préférée de 2 à 20 % en poids.

11. Utilisation selon une ou plusieurs des revendications 2 à 4, dans laquelle la composition contient en outre une ou plusieurs substances tensioactives, la proportion du ou des copolymères A) étant de 1 à 90 % en poids, de préférence de 2 à 60 % en poids et de manière particulièrement préférée de 5 à 50 % en poids, la proportion du ou des solvants non miscibles avec l'eau du composant B) étant de 1 à 98,9 % en poids, de préférence de 20 à 80 % en poids et de manière particulièrement préférée de 48 à 90 % en poids, et la proportion de la ou des substances tensioactives étant de 0,1 à 50 % en poids, de préférence de 1 à 30 % en poids, et de manière particulièrement préférée de 2 à 20 % en poids.

12. Utilisation selon une ou plusieurs des revendications 1 à 4, dans laquelle la composition contient en outre un ou plusieurs pesticides et une ou plusieurs substances tensioactives.

13. Utilisation selon la revendication 12, dans laquelle la proportion du ou des copolymères A) est de 0,1 à 40 % en poids, de préférence de 0,5 à 30 % en poids et de manière particulièrement préférée de 1 à 20 % en poids, la proportion du ou des pesticides est de 0,1 à 75 % en poids, de préférence de 5 à 50 % en poids et de manière particulièrement préférée de 10 à 40 % en poids, et la proportion de la ou des substances tensioactives est de 0,1 à 30 % en poids, de préférence de 0,5 à 25 % en poids et de manière particulièrement préférée de 1 à 20 % en poids.

14. Utilisation selon une ou plusieurs des revendications 2 à 4, dans laquelle la composition contient en outre un ou plusieurs pesticides et une ou plusieurs substances tensioactives, la proportion du ou des copolymères A) étant de 0,1 à 40 % en poids, de préférence de 0,5 à 30 % en poids et de manière particulièrement préférée de 1 à 20 % en poids, la proportion du composant B) étant de 1 à 99,7 % en poids, de préférence de 5 à 80 % en poids et de manière particulièrement préférée de 10 à 70 % en poids, la proportion du ou des pesticides étant de 0,1 à 75 % en poids, de préférence de 5 à 50 % en poids et de manière particulièrement préférée de 10 à 40 % en poids, et la proportion de la ou des substances tensioactives étant de 0,1 à 30 % en poids, de préférence de 0,5 à 25 % en poids et de manière particulièrement préférée de 1 à 20 % en poids.

15. Utilisation selon une ou plusieurs des revendications 1 à 14, **caractérisée en ce que** ledit au moins un acide dicarboxylique b) est l'acide phtalique et ledit au moins un acide monocarboxylique c) est l'acide gras de coco.

16. Procédé de réduction de la dérive lors de l'application de préparations pesticides, selon lequel une bouillie de pulvérisation est pulvérisée sur les plantes à traiter ou leur emplacement, la bouillie de pulvérisation contenant des pesticides contenant un ou plusieurs copolymères A) ou une composition selon l'une quelconque des revendications 1 à 15.
